(19) **Europäisches Patentamt**
**European Patent Office**
**Office européen des brevets**

(11) **EP 3 998 188 A1**

(12) **EUROPEAN PATENT APPLICATION**
published in accordance with Art. 153(4) EPC

(43) Date of publication:
**18.05.2022 Bulletin 2022/20**

(21) Application number: **20836968.6**

(22) Date of filing: **09.06.2020**

(51) International Patent Classification (IPC):
**B62D 101/00** *(2006.01)*  **B60T 7/12** *(2006.01)*
**B62D 6/00** *(2006.01)*  **B60W 10/20** *(2006.01)*
**B60W 10/18** *(2012.01)*  **B60W 10/04** *(2006.01)*
**B60W 30/09** *(2012.01)*

(52) Cooperative Patent Classification (CPC):
**B60T 7/12; B60W 10/04; B60W 10/18;**
**B60W 10/20; B60W 30/09; B62D 6/00**

(86) International application number:
**PCT/JP2020/022647**

(87) International publication number:
**WO 2021/005940 (14.01.2021 Gazette 2021/02)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **09.07.2019 JP 2019127623**

(71) Applicant: **Hitachi Astemo, Ltd.**
**Hitachinaka-shi, Ibaraki 312-8503 (JP)**

(72) Inventors:
• **MATSUDA, Satoru**
  **Hitachinaka-shi, Ibaraki 312-8503 (JP)**
• **KAMIIE, Tadaaki**
  **Hitachinaka-shi, Ibaraki 312-8503 (JP)**
• **NISHIURA, Chikara**
  **Hitachinaka-shi, Ibaraki 312-8503 (JP)**

(74) Representative: **Hoefer & Partner Patentanwälte mbB**
**Pilgersheimer Straße 20**
**81543 München (DE)**

(54) **STEERING CONTROL DEVICE, STEERING CONTROL METHOD, AND STEERING CONTROL SYSTEM**

(57)     A steering control apparatus according to the present invention acquires a reference target torque, which is a torque regarding steering that is required to avoid an obstacle present ahead of a vehicle, determines a torque correction value for correcting the reference target torque based on specifications regarding running of the vehicle, determines a target torque based on the reference target torque and the torque correction value, and outputs a torque instruction for achieving the determined target torque to an actuator regarding the steering.

Fig. 2

EP 3 998 188 A1

**Description**

TECHNICAL FIELD

The present invention relates to a steering control apparatus, a steering control method, and a steering control system that control an actuator regarding steering.

BACKGROUND ART

A steering reaction force control apparatus discussed in PTL 1 calculates a target steering damping torque Td based on a steering angle speed dθ, which is a temporal differential value of a steering angle θ or a temporal differential value of the steering angle θ corrected based on a target steering angle θt for driving aid control, when a driving aid apparatus is in operation, and reduces the target steering damping torque Td while the driving aid apparatus is in operation compared to that while the driving aid apparatus is out of operation if the steering angle speed dθ is lower than a reference value θdc.

CITATION LIST

PATENT LITERATURE

PTL 1: Japanese Patent Application Public Disclosure No. 2017-081250

SUMMARY OF INVENTION

TECHNICAL PROBLEM

Then, in the case of the steering control that increases the target steering damping torque according to an increase in the steering angle speed when the steering angle speed is higher than the reference value, the target steering damping torque may work as a drag on the steering and collision avoidability may reduce when the steering angle speed suddenly increases due to steering for avoiding an obstacle present ahead of the vehicle.

SOLUTION TO PROBLEM

An object of the present invention is to provide a steering control apparatus, a steering control method, and a steering control system that can prevent a reduction in collision avoidability due to steering.
One aspect of the present invention acquires a reference target torque, which is a torque regarding steering that is required to avoid an obstacle present ahead of a vehicle, determines a torque correction value for correcting the reference target torque based on specifications regarding running of the vehicle, determines a target torque based on the reference target torque and the torque correction value, and outputs a torque instruction for achieving the determined target torque to an actuator regarding the steering.
According to the one aspect of the present invention, the reduction in the collision avoidability due to the steering can be prevented.

BRIEF DESCRIPTION OF DRAWINGS

Fig. 1 schematically illustrates the configuration of a vehicle including a steering control system.
Fig. 2 is a functional block diagram of a control apparatus according to a first embodiment.
Fig. 3 is a flowchart illustrating a procedure of braking control and steering control according to the first embodiment.
Fig. 4 illustrates the positional relationship between a vehicle and an obstacle.
Fig. 5 illustrates a map for determining a target steering torque reference value Tref.
Fig. 6 illustrates a map for determining a correction gain Kcol according to a collision risk.
Fig. 7 is timing charts exemplifying changes in a steering angle and a steering torque when a correction of a target steering torque Ttgt using the correction gain Kcol is not carried out.
Fig. 8 is timing charts exemplifying changes in the steering angle and the steering torque when the correction of the target steering torque Ttgt using the correction gain Kcol is carried out.
Fig. 9 is a functional block diagram of a control apparatus according to a second embodiment.
Fig. 10 is a flowchart illustrating a procedure of braking control and steering control according to the second embodiment.
Fig. 11 is a map for determining a correction gain Kfl according to a change in a load of a front wheel.
Fig. 12 is timing charts exemplifying changes in the steering angle and the steering torque when a correction of the target steering torque Ttgt using the correction gain Kfl is not carried out.
Fig. 13 is timing charts exemplifying changes in the steering angle and the steering torque when the correction of the target steering torque Ttgt using the correction gain Kfl is carried out.
Fig. 14 is a functional block diagram of a control apparatus according to a third embodiment.
Fig. 15 is a flowchart illustrating a procedure of braking control and steering control according to the third embodiment.
Fig. 16 illustrates a map for determining a correction gain Kwt according to a change in the weight of the vehicle.
Fig. 17 is timing charts exemplifying changes in the steering angle and the steering torque when a correction of the target steering torque Ttgt using the correction gain Kwt is not carried out.

Fig. 18 is timing charts exemplifying changes in the steering angle and the steering torque when the correction of the target steering torque Ttgt using the correction gain Kwt is carried out.

Fig. 19 is a functional block diagram of a control apparatus according to a fourth embodiment.

Fig. 20 is a flowchart illustrating a procedure of braking control and steering control according to the fourth embodiment.

Fig. 21 is a map for determining a correction gain Kmu according to a frictional coefficient of a road surface.

Fig. 22 is timing charts exemplifying changes in the steering angle and the steering torque when a correction of the target steering torque Ttgt using the correction gain Kmu is not carried out.

Fig. 23 is timing charts exemplifying changes in the steering angle and the steering torque when the correction of the target steering torque Ttgt using the correction gain Kmu is carried out.

Fig. 24 is a functional block diagram of a control apparatus according to a fifth embodiment.

Fig. 25 is a flowchart illustrating a procedure of braking control and steering control according to the fifth embodiment.

## DESCRIPTION OF EMBODIMENTS

In the following description, embodiments of a steering control apparatus, a steering control method, and a steering control system according to the present invention will be described with reference to the drawings.

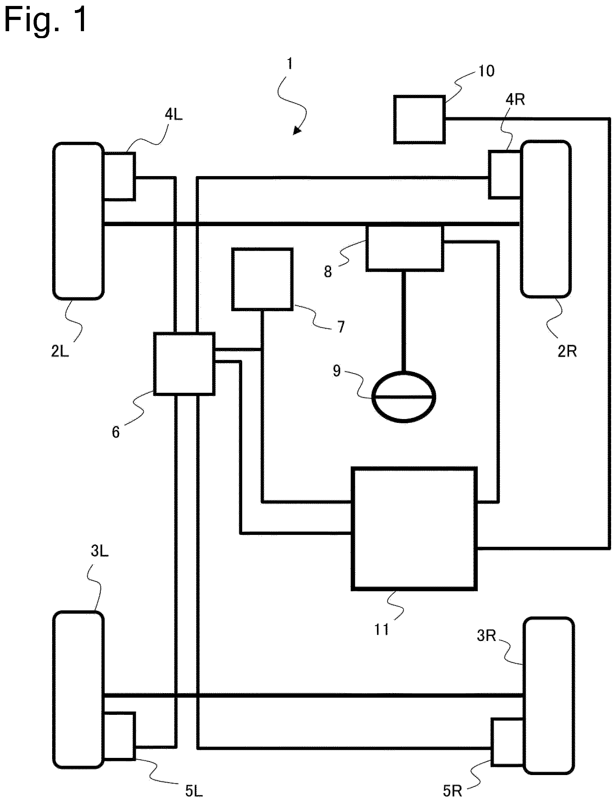

Fig. 1 is a schematic configuration diagram illustrating one exemplary configuration of a vehicle 1 including a steering control system according to the present invention.

The vehicle 1 illustrated in Fig. 1 is a four-wheeled automobile including a steering apparatus that turns front wheels via a rotational operation of a steering wheel, such as an electric power steering apparatus, and an electronic control apparatus that controls the steering apparatus, and further including apparatuses such as an external world perception apparatus that acquires, for example, road information ahead of the vehicle by using, for example, both a camera, a radar, or a GPS (Global Positioning System) and map information, and a sideslip prevention device that acquires, for example, information regarding the running speed of the vehicle and the running state of the vehicle, thereby being able to conduct a driving aid or autonomous driving.

The vehicle 1 includes a front left wheel 2L, a front right wheel 2R, a rear left wheel 3L, and a rear right wheel 3R.

The individual wheels 2L, 2R, 3L, and 3R include wheel cylinders 4L, 4R, 5L, and 5R forming a hydraulic braking apparatus 4, respectively.

A wheel cylinder hydraulic pressure control apparatus 6 is an electronic control apparatus represented by a sideslip prevention device that acquires various kinds of vehicle information from a vehicle information acquisition apparatus 7 and controls a brake fluid pressure (hydraulic pressure) to apply to each of the wheel cylinders 4L, 4R, 5L, and 5R based on the acquired vehicle information.

The vehicle information acquisition apparatus 7 includes a speed acquisition portion, a deceleration acquisition portion, a specification information acquisition portion, a passenger number detection portion, a loaded goods detection portion, and the like, as will be described below.

An electric power steering apparatus 8 is a steering apparatus that assists an operation of a steering wheel 9 by a driver with use of a torque generated by a motor, and can autonomously steer the front wheels 2L and 2R with use of the motor.

The electric power steering apparatus 8 includes a steering torque sensor that detects a steering torque (a steering operation torque), a driving unit that drives the motor, and the like, in addition to the motor.

An external world perception apparatus 10 is an external world perception portion that acquires external world information such as road information and obstacle information ahead of the vehicle using a camera, a radar, or the like.

A control apparatus 11 is an electronic control apparatus mainly formed by a microcomputer including a processor, a memory, an I/O, and a bus connecting them, and carries out a calculation based on input various kinds of information and outputs a calculation result.

Then, the control apparatus 11 includes a function of controlling braking and steering to avoid a collision of the vehicle 1 with an obstacle (a three-dimensional object) present ahead based on the various kinds of information acquired from the external world perception apparatus 10, the wheel cylinder hydraulic pressure control apparatus 6, the vehicle information acquisition apparatus 7, and the like as software, and outputs a torque instruction for avoiding the collision to the electric power steering apparatus 8 as a steering instruction and outputs an instruction indicating a target brake hydraulic pressure for avoiding the collision to the wheel cylinder hydraulic pressure control apparatus 6 as a braking instruction.

In other words, the control apparatus 11 is a steering control apparatus including a control portion that controls the electric power steering apparatus 8, which is an actuator regarding steering that is mounted on the vehicle 1.

In the following description, the braking control and the steering control for avoiding the collision by the control apparatus 11 will be described in detail.

"First Embodiment"

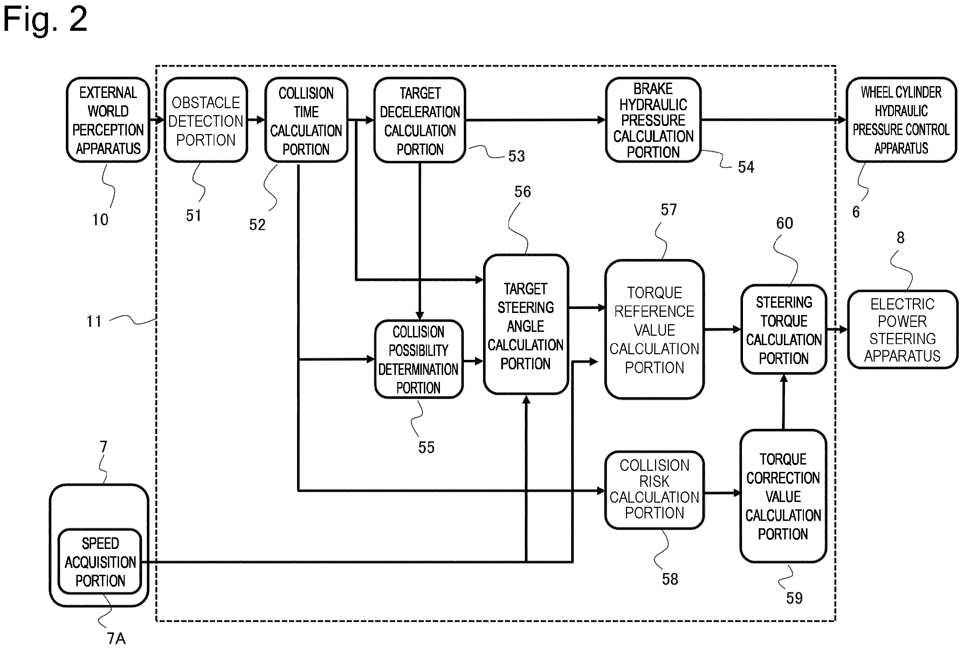

Fig. 2 is a functional block diagram illustrating a first embodiment of the control apparatus 11.

An obstacle detection portion 51 detects the obstacle present ahead of the vehicle 1 based on the external world information acquired from the external world perception apparatus 10.

A collision time calculation portion 52 calculates a time-to-collision TTC, which is a time predicted to be taken until the vehicle 1 collides with the obstacle based on a relative speed between the vehicle 1 and the obstacle and a relative distance between the vehicle 1 and the obstacle, when the obstacle is present ahead of the vehicle 1.

A target deceleration calculation portion 53 calculates a target deceleration Gtgt, which is a deceleration necessary to allow the vehicle 1 to stop just before the obstacle without colliding with the obstacle, based on the relative speed between the vehicle 1 and the obstacle and the relative distance between the vehicle 1 and the obstacle.

A brake hydraulic pressure calculation portion 54 calculates a target brake hydraulic pressure Ptgt for achieving the target deceleration Gtgt, and outputs information regarding the calculated target brake hydraulic pressure Ptgt to the wheel cylinder hydraulic pressure control apparatus 6.

After acquiring the information regarding the target brake hydraulic pressure Ptgt, the wheel cylinder hydraulic pressure control apparatus 6 applies a brake hydraulic pressure to each of the wheel cylinders 4L, 4R, 5L, and 5R according to the target brake hydraulic pressure Ptgt.

In this manner, the control apparatus 11 attempts to avoid the collision of the vehicle 1 with the obstacle by generating a braking torque so as to stop the vehicle 1 just before the obstacle when the obstacle is present ahead of the vehicle 1.

Further, a collision possibility determination portion 55 determines whether the vehicle 1 should move laterally by the steering control to avoid the collision because the above-described braking control is insufficient to stop the vehicle 1 just before the obstacle.

Then, if the collision possibility determination portion 55 determines that the steering control is necessary to avoid the collision, a target steering angle calculation portion 56 calculates a target steering angle θtgt to cause the vehicle 1 to move laterally by an amount necessary to avoid the collision based on a distance from a center of a running trajectory of the vehicle 1 to the obstacle, a vehicle body speed acquired from a speed acquisition portion 7A of the vehicle information acquisition apparatus 7, the time-to-collision TTC, and the like.

A torque reference value calculation portion 57 calculates a target steering torque reference value Tref, which is a steering torque (a steering operation torque) to allow the actual steering angle to reach the target steering angle θtgt, based on the target steering angle θtgt and the vehicle body speed acquired from the speed acquisition portion 7A of the vehicle information acquisition apparatus 7. In other words, the control apparatus 11 determines the target steering torque reference value Tref based on the speed of the vehicle 1 and the target steering angle θtgt required to avoid the obstacle present ahead of the vehicle 1.

The above-described target steering torque reference value Tref corresponds to a reference target torque, which is a torque regarding steering that is required to avoid the obstacle present ahead of the vehicle 1, and the torque reference value calculation portion 57 has a function of acquiring the reference target torque.

The control apparatus 11 can acquire a target motor torque for the motor of the electric power steering apparatus 8 as the reference target torque, and the reference target torque is not limited to the steering torque (the steering operation torque).

Further, the control apparatus 11 is not limited to the configuration that calculates the target steering torque reference value Tref (the reference target torque) based on the target steering angle θtgt and the vehicle body speed, and, for example, can determine the target steering torque reference value Tref based on, for example, the direction of the steering for avoiding the obstacle.

A collision risk calculation portion 58 calculates a risk of a collision between the vehicle 1 and the obstacle based on the time-to-collision TTC.

Since the time-to-collision TTC is determined based on the relative speed between the vehicle 1 and the obstacle and the relative distance between the vehicle 1 and the obstacle as described above, the collision risk calculated by the collision risk calculation portion 58 corresponds to a risk of the collision with the obstacle based on the relative distance between the vehicle 1 and the obstacle and the speed of the vehicle 1.

Then, the risk of the collision with the obstacle is supposed to increase as the time-to-collision TTC reduces.

A torque correction value calculation portion 59 calculates a correction gain Kcol, which is a correction value for the steering torque to increase responsiveness in the steering control for avoiding the collision, based on the collision risk according to the time-to-collision TTC.

More specifically, the torque correction value calculation portion 59 calculates the torque correction value for correcting the reference target torque, which is the torque regarding the steering that is required to avoid the obstacle present ahead of the vehicle 1, based on the collision risk (the time-to-collision TTC), which is the specifications regarding the running of the vehicle 1.

The torque correction value calculation portion 59 sets the correction gain Kcol so as to increase the target steering torque when the time-to-collision TTC is short and the collision risk is high compared to the target steering torque when the time-to-collision TTC is relatively long and the collision risk is low.

In other words, the control apparatus 11 increases the correction gain Kcol as the torque correction value as the collision risk increases (the time-to-collision TTC reduces), thereby increasing the target steering torque as a result of the correction using the correction gain Kcol.

A steering torque calculation portion 60 calculates a final target steering torque Ttgt by correcting the target steering torque reference value Tref with use of the correction gain Kcol, and outputs information regarding the calculated target steering torque Ttgt to the electric power steering apparatus 8.

More specifically, the steering torque calculation portion 60 calculates the target steering torque Ttgt as the target torque based on the target steering torque reference value Tref, which is the reference target torque, and the correction gain Kcol, which is the torque correction value, and outputs a torque instruction for achieving the calculated target steering torque Ttgt to the electric power steering apparatus 8, which is the actuator regarding the steering.

Upon acquiring the information regarding the target steering torque Ttgt, the electric power steering apparatus 8 drives and controls the motor so as to achieve the target steering torque Ttgt, i.e., the target steering operation torque.

Now, when the time-to-collision TTC reduces and the collision risk increases, the correction gain Kcol increases and the target steering torque Ttgt is amplified, so that the occurrence of a response delay in the steering is prevented when the collision risk is high, and the collision avoidability based on the steering control is improved.

In other words, the control apparatus 11 prevents a delay in following behind the target steering angle θtgt to thereby improve the collision avoidability by applying a higher steering torque than the target steering torque reference value Tref for allowing the actual steering angle to reach the target steering angle θtgt when the time-to-collision TTC is short and the collision risk is high, i.e., when the collision avoidance is highly urgent and a delay in the steering control further largely affects the collision avoidability.

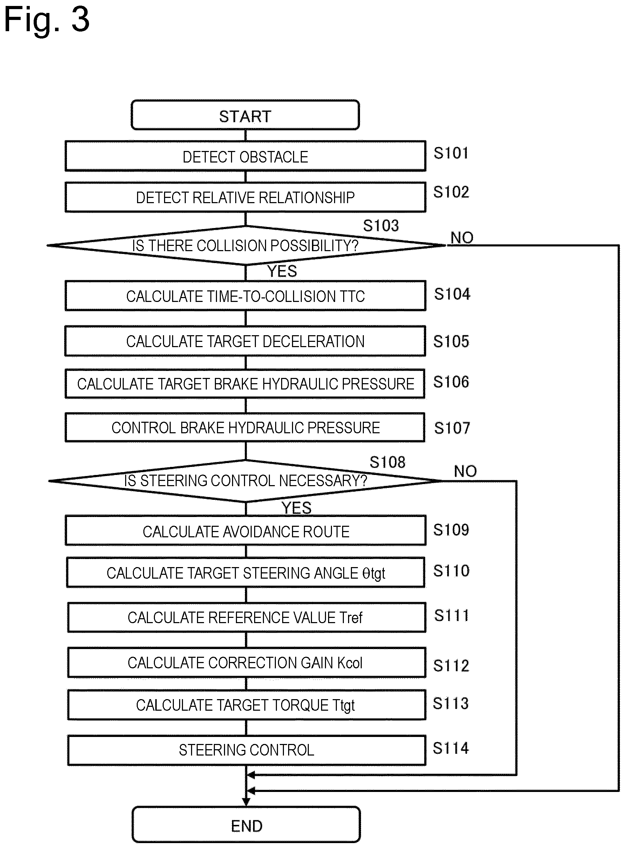

Fig. 3 is a flowchart illustrating a procedure of the braking control and the steering control for avoiding the collision by the control apparatus 11.

In the following description, processing for calculating the above-described target brake hydraulic pressure Ptgt and target steering torque Ttgt will be described in further detail according to the flowchart in Fig. 3.

In step S101 (the obstacle detection portion 51), the control apparatus 11 carries out the detection of an obstacle present ahead of the vehicle 1 based on the external world information acquired from the external world perception apparatus 10.

Then, if an obstacle is detected, in the next step, step S102, the control apparatus 11 identifies the relative positional relationship between the vehicle 1 and the obstacle.

The obstacle includes a stationary three-dimensional object (a stationary object) and a moving three-dimensional object (a moving object).

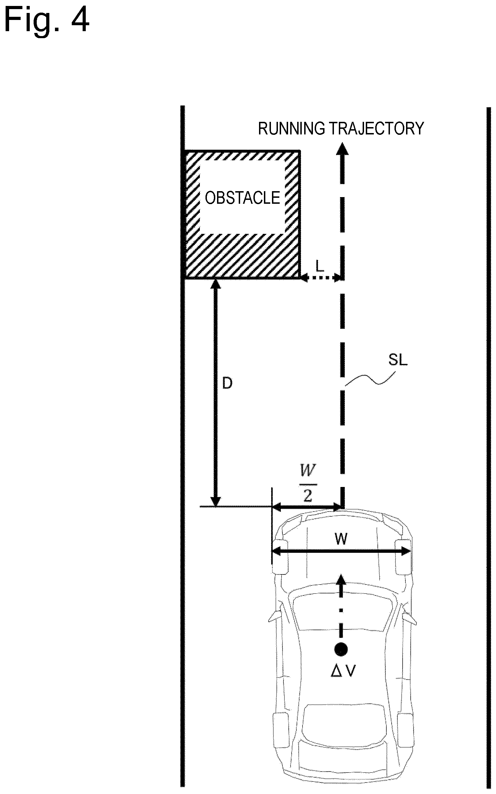

Fig. 4 exemplarily illustrates the relative positional relationship between the vehicle 1 and the obstacle.

The control apparatus 11 determines a relative distance D [m] between the vehicle 1 and an obstacle OB, a distance L [m] from a center SL of the running trajectory of the vehicle 1 to the obstacle OB, and a relative speed ΔV [m/s] between the vehicle 1 and the obstacle OB illustrated in Fig. 4 as physical amounts indicating the relative positional relationship between the vehicle 1 and the obstacle OB in step S102.

In Fig. 4, W represents the full width [m] of the vehicle 1.

In step S103, the control apparatus 11 determines whether there is a possibility of a collision between the vehicle 1 and the obstacle OB.

For example, the control apparatus 11 determines that there is a possibility of a collision when the relationship indicated by an equation 1 is satisfied.

[Equation 1]

$$L < \frac{W}{2}$$

If the vehicle 1 runs along the center SL of the running trajectory when the distance L from the center SL of the running trajectory of the vehicle 1 to the obstacle OB is shorter than a half of the full width W of the vehicle, the vehicle 1 and the obstacle OB are supposed to collide with each other (refer to Fig. 4).

Therefore, the control apparatus 11 determines that there is a collision possibility when the distance L from the center SL of the running trajectory of the vehicle 1 to the obstacle OB is shorter than the half of the full width W of the vehicle.

If determining that there is a possibility that the vehicle 1 collides with the obstacle OB, the control apparatus 11 proceeds to step S104 and the steps subsequent thereto and performs collision avoidance control for avoiding the collision with the obstacle OB.

On the other hand, if denying the possibility that the vehicle 1 collides with the obstacle OB, the control apparatus 11 ends the present routine directly because the condition for the execution of the collision avoidance control is not satisfied.

In step S104 (the collision time calculation portion 52), the control apparatus 11 calculates the time-to-collision TTC [s] expected to be taken since the present moment until the vehicle 1 collides with the obstacle OB according to an equation 2.

## [Equation 2]

$$\text{TTC} = \frac{D}{\Delta V}$$

More specifically, the control apparatus 11 calculates a time expected to be taken for the vehicle 1 to advance at the relative speed ΔV at the present moment by the relative distance D [m] between the vehicle 1 and the obstacle OB at present moment, i.e., a collision prediction time expected to be taken until the vehicle 1 collides with the obstacle OB as the time-to-collision TTC.

In the next step, step S105 (the target deceleration calculation portion 53), the control apparatus 11 calculates the target deceleration Gtgt to set as a target in the braking control to stop the vehicle 1 just before the obstacle OB without colliding with the obstacle OB.

In the processing for calculating the target deceleration Gtgt, first, the control apparatus 11 calculates a theoretical value Gref [m/s²] of the deceleration necessary to stop the vehicle 1 just before the obstacle OB based on the relative speed ΔV [m/s] and the relative distance D [m] according to an equation 3.

## [Equation 3]

$$G_{ref} = -\frac{\Delta V^2}{D}$$

The control apparatus 11 handles an acceleration as a positive value and a deceleration as a negative value, and therefore is set so as to calculate the theoretical value Gref of the deceleration as a negative value in the equation 3.

Then, the control apparatus 11 can set the theoretical value Gref of the deceleration calculated according to the equation 3 directly as the final target deceleration Gtgt.

However, the deceleration according to the theoretical value Gref may be unable to be generated actually, for example, when a limit (an upper limit value) on the deceleration in the vehicle system or the frictional coefficient of the road surface is lower than the reference.

Therefore, the control apparatus 11 selects the largest value (i.e., a value having the smallest absolute value) among a deceleration limit value Gmax imposed due to the system, a deceleration Gmu corresponding to the road surface frictional coefficient, and the theoretical value Gref according to an equation 4 as a feasible deceleration, and sets the selected deceleration as the final target deceleration Gtgt.

## [Equation 4]

$$G_{tgt} = max\left(G_{ref}, G_{max}, G_{mu}\right)$$

In the next step, step S106 (the brake hydraulic pressure calculation portion 54), the control apparatus 11 calculates the target brake hydraulic pressure Ptgt [Pa] of each of the wheels to achieve the target deceleration Gtgt according to an equation 5.

## [Equation 5]

$$P_{tgt} = \frac{M \times |G_{tgt}|}{2K_f + 2K_r}$$

In the above-described equation 5, Kf represents a conversion coefficient [N/MPa] between the braking force on the front wheel and the brake hydraulic pressure, Kr represents a conversion coefficient [N/MPa] between the braking force on the rear wheel and the brake hydraulic pressure, and M represents the mass of the vehicle [kg].

Further, since the target deceleration Gtgt is calculated as a negative value, the target brake hydraulic pressure Ptgt is calculated with use of the absolute value of the target deceleration Gtgt in the equation 5.

In the next step, step S107, the control apparatus 11 outputs information regarding the target brake hydraulic pressure Ptgt to the wheel cylinder hydraulic pressure control apparatus 6, and applies the brake hydraulic pressure for achieving the target deceleration Gtgt to each of the wheel cylinders 4L, 4R, 5L, and 5R via the wheel cylinder hydraulic pressure control apparatus 6.

The wheel cylinder hydraulic pressure control apparatus 6 can perform anti-lock brake control for preventing a lock of a wheel when applying the brake hydraulic pressure according to the target brake hydraulic pressure Ptgt.

In the next step, step S108 (the collision possibility determination portion 55), the control apparatus 11 determines whether the steering control is necessary to avoid the collision of the vehicle 1 with the obstacle OB.

At this time, the control apparatus 11 determines that the steering control is necessary to avoid the collision when the correlation between the theoretical value Gref of the deceleration and the actual deceleration Gact of the vehicle 1 as a result of the braking control satisfies a relationship indicated by an equation 6.

[Equation 6]

$$|G_{ref}| > |G_{act}|$$

More specifically, the control apparatus 11 compares the actual deceleration Gact of the vehicle 1 and the theoretical value Gref, and determines that the vehicle 1 cannot be stopped just before the obstacle OB and the steering control should be performed in addition to the braking control to avoid the collision if the actual speed at which the vehicle speed reduces is slower than the theoretical value Gref.

Then, if the relationship indicated by the equation 6 is not satisfied and the vehicle 1 is predicted to be able to be stopped just before the obstacle OB with use of the braking control, the control apparatus 11 ends the present routine without performing the steering control for avoiding the collision.

On the other hand, if the relationship indicated by the equation 6 is satisfied and the vehicle 1 is predicted to be unable to be stopped just before the obstacle OB with use of the braking control, the control apparatus 11 proceeds to step S109 and the steps subsequent thereto and performs the steering control for avoiding the collision.

In step S109, the control apparatus 11 calculates a lateral movement amount LM [m] of the vehicle 1 necessary to avoid the collision, i.e., an avoidance route, which is a route to allow the vehicle 1 to run while avoiding the obstacle OB, according to an equation 7.

[Equation 7]

$$LM = \frac{W}{2} - L$$

A possibility that the vehicle 1 and the obstacle OB collide with each other is raised due to the distance L from the center of the running trajectory of the vehicle 1 to the obstacle OB that is shorter than the half W/2 of the full width of the vehicle, and this means that the collision between the vehicle 1 and the obstacle OB can be avoided if the vehicle 1 moves laterally in a direction away from the obstacle OB by a distance corresponding to the difference between the half W/2 of the full width of the vehicle and the distance L.

Therefore, the control apparatus 11 calculates the lateral movement amount LM for causing the vehicle 1 to move laterally by the distance corresponding to the difference between the half W/2 of the full width of the vehicle and the distance L according to the equation 7.

In the next step, step S110 (the target steering angle calculation portion 56), the control apparatus 11 calculates the target steering angle θtgt [rad] necessary to cause the vehicle 1 to move laterally by the lateral movement amount LM within the time-to-collision TTC according to an equation 8.

[Equation 8]

$$\theta_{tgt} = \left( \frac{W_{hb}(1 + A \cdot V^2)}{V^2} \right) \times GR$$

In the equation 8, Whb [m] represents the wheelbase of the vehicle 1, A represents the stability factor of the vehicle 1, V [m/s] represents the vehicle body speed of the vehicle 1, and GR represents the steering gear ratio.

The value of the stability factor A is handled as a positive value when the chassis characteristic of the vehicle 1 is understeer, and is handled as a negative value when the chassis characteristic of the vehicle 1 is oversteer.

Next, in step Sill (the torque reference value calculation portion 57), the control apparatus 11 calculates a steering torque necessary to allow the angle of the steering wheel 9 to reach the target steering angle θtgt (a target steering wheel angle) as a target steering torque reference value Tref [Nm].

Now, the target steering torque reference value Tref is a target value of a torque (a steering torque) applied to the steering wheel 9 due to a self-aligning torque generated depending on the vehicle body speed V and the target steering angle θtgt.

This calculation allows the vehicle 1 to manage both the torque generated by the motor and the steering torque derived from the driver's operation of the steering wheel 9 when an instruction indicating the target steering torque is fed to the electric power steering apparatus 8, thereby realizing steering control that eases the driver's uncomfortable feeling.

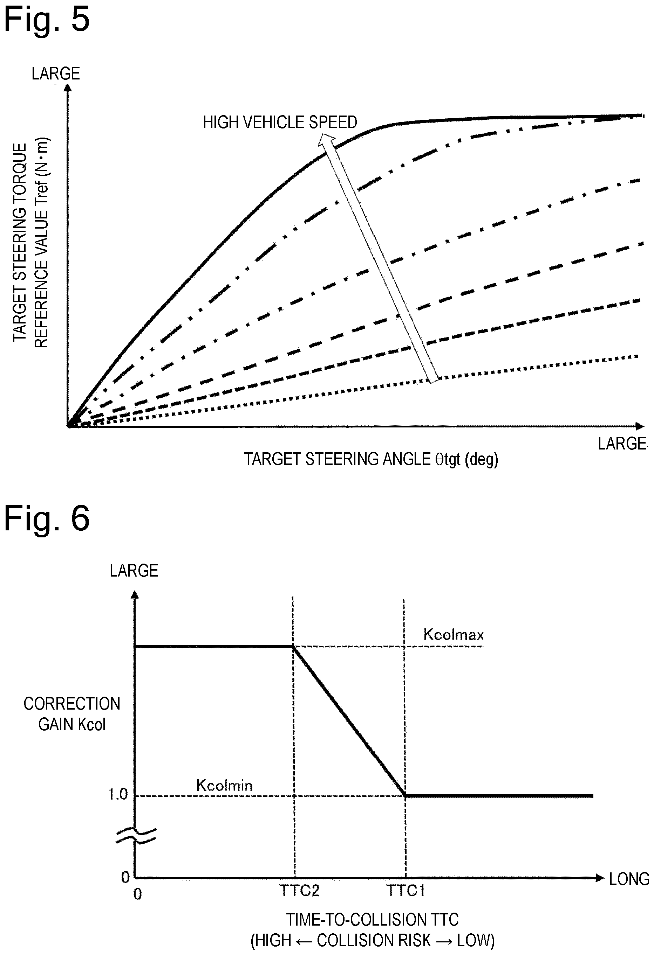

The control apparatus 11 can set the target steering torque reference value Tref arbitrarily, but calculates the target steering torque reference value Tref, for example, based on the vehicle body speed V and the target steering angle θtgt by referring to a map like the example illustrated in Fig. 5 set according to the characteristic of the vehicle 1 to which the present embodiment is applied.

The map illustrated in Fig. 5 is a map indicating the correlation between the target steering angle θtgt and the target steering torque reference value Tref for each vehicle body speed V, and characterized in that the target steering torque reference value Tref is set to a further high value as the target steering angle θtgt increases, and the target steering torque reference value Tref is set to a further high value as the vehicle body speed V increases.

In step S112 (the torque correction value calculation portion 59 and the collision risk calculation portion 58), the control apparatus 11 calculates the correction gain Kcol, which is the torque correction value used to determine the final target steering torque Ttgt by correcting the target steering torque reference value Tref, based on the collision risk.

Now, the time-to-collision TTC is correlated with the collision risk and the collision risk increases as the time-to-collision TTC reduces, and therefore the control apparatus 11 sets the correction gain Kcol based on a result of the determination about the collision risk by calculating the correction gain Kcol based on the time-to-collision TTC.

Then, the control apparatus 11 increases the correction gain Kcol as the time-to-collision TTC reduces and the collision risk increases in such a manner that the final target steering torque Ttgt is further largely amplified as the time-to-collision TTC reduces and the collision risk increases.

When the control apparatus 11 feeds the instruction indicating the target steering torque Ttgt to the electric power steering apparatus 8, a response delay may occur in the actual steering angle and make it impossible to acquire a sufficient steering response to a precipitous change in the target steering angle θtgt necessary to avoid the collision, thereby leading to a failure to avoid the collision with the obstacle OB.

Therefore, when the vehicle 1 has a high collision risk in which there is a possibility that the collision cannot be avoided due to the delay in the steering response (i.e., when the time-to-collision TTC is short), the control apparatus 11 feeds the instruction indicating the target steering torque Ttgt higher than the target steering torque reference value Tref necessary to allow the steering angle to reach the target steering angle θtgt to the electric power steering apparatus 8, thereby reducing the delay in the steering response and preventing the reduction in the collision avoidability.

Fig. 6 illustrates one exemplary content of a map for determining the correction gain Kcol as the torque correction value based on the time-to-collision TTC.

The control apparatus 11 determines the correction gain Kcol corresponding to the time-to-collision TTC by referring to the map in Fig. 6, and sets the result of multiplying the target steering torque reference value Tref by the correction gain Kcol as the final target steering torque Ttgt.

In Fig. 6, the correction gain Kcol is set to a minimum value Kcolmin when the time-to-collision TTC is longer than a first time TTC1 (TTC1 > 0) and a sufficient spare time is available until the timing at which the vehicle 1 and the obstacle OB are expected to collide with each other, and the collision risk is sufficiently low.

For example, assume that the minimum value Kcolmin is 1.0, which is a value that does not correct the target steering torque reference value Tref actually.

When the time-to-collision TTC reduces to the first time TTC1 or shorter to enter a collision risk region requiring the torque correction, the correction gain Kool proportionally increases as the time-to-collision TTC reduces, i.e., the collision risk increases.

Then, the correction gain Kcol reaches a maximum value Kcolmax (Kcolmin < Kcolmax) when the time-to-collision TTC reduces as far as a second time TTC2 (0 < TTC2 < TTC1), and is kept at the maximum value Kcolmax when the time-to-collision TTC is equal to or shorter than the second time TTC2.

The second time TTC2 and the maximum value Kcolmax are adapted so as to be able to sufficiently reduce the steering delay with the aid of the amplification of the target steering torque Ttgt and realize the collision avoidance with the aid of the lateral movement of the vehicle 1 based on the steering control when the time-to-collision TTC reduces to the first time TTC1 or shorter and the collision risk increases.

However, the correlation between the time-to-collision TTC and the correction gain Kcol is not limited to the correlation exemplified in Fig. 6, and may be any characteristic that brings about a further amplification change of the final target steering torque Ttgt according to a reduction in the time-to-collision TTC, i.e., an increase in the collision risk.

Now, the first time TTC1 can be set in such a manner that the correction gain Kcol, which is the torque correction value determined based on the collision risk, changes so as to increase from the minimum value Kcolmin after the timing at which the braking force is applied to the vehicle 1 to avoid the collision of the vehicle 1 with the obstacle OB.

The control apparatus 11 may make the driver of the vehicle 1 feel uncomfortable if amplifying the target steering torque Ttgt since before the braking force is applied to avoid the collision, i.e., since before the vehicle 1 enters an emergency avoidance mode, and therefore changes the correction gain Kcol so as to increase it after the driver is aware that the vehicle 1 enters the emergency avoidance mode, thereby preventing the driver from feeling uncomfortable.

Now, the risk of the collision of the vehicle 1 with the obstacle OB is supposed to increase as the time-to-collision TTC reduces, and therefore the setting of the correction gain Kcol based on the time-to-collision TTC corresponds to the setting of the correction gain Kcol based on the collision risk, which means that the correction gain Kcol further increases and the final target steering torque Ttgt increases as the collision risk increases.

In other words, a second collision risk, which is the collision risk when the time-to-collision TTC is the second time TTC2, is higher than the first collision risk, which is the collision risk when the time-to-collision TTC is the first time TTC1, and the correction gain Kcol at the second collision risk is set to a greater value than the correction gain Kcol at the first collision risk.

Further, since the time-to-collision TTC is a value calculated based on the relative speed ΔV and the relative distance D between the vehicle 1 and the obstacle OB, the processing by the control apparatus 11 in step S112 corresponds to processing for determining the correction gain Kcol (the torque correction value) based on the collision risk based on the relative speed ΔV and the relative distance D.

The control apparatus 11 can determine the correction gain Kcol based on the relative speed ΔV and the relative distance D, and increases the correction gain Kcol as the relative speed ΔV increases and increases the correction gain Kcol as the relative distance D reduces.

Next, in step S113 (the steering torque calculation portion 60), the control apparatus 11 calculates the final target steering torque Ttgt based on the target steering torque reference value Tref and the correction gain Kcol according to an equation 9.

[Equation 9]

$$T_{tgt} = T_{ref} \times K_{col}$$

Then, in the next step, step S114, the control apparatus 11 outputs the torque instruction (the steering torque instruction) for achieving the target steering torque Ttgt to the electric power steering apparatus 8.

The electric power steering apparatus 8 performs the steering control based on the instruction indicating the target steering torque Ttgt to allow the angle of the steering wheel 9 to reach the target steering angle θtgt, thereby causing the vehicle 1 to move laterally by the lateral movement amount LM necessary to avoid the collision.

According to the above-described first embodiment, the control apparatus 11 calculates the final target steering toque Ttgt by correcting the target steering torque reference value Tref with use of the correction gain Kcol based on the collision risk, thereby being able to amplify the steering torque when the collision risk increases to improve the steering responsiveness to a precipitous change in the target steering angle θtgt, thus improving the collision avoidability based on the steering control.

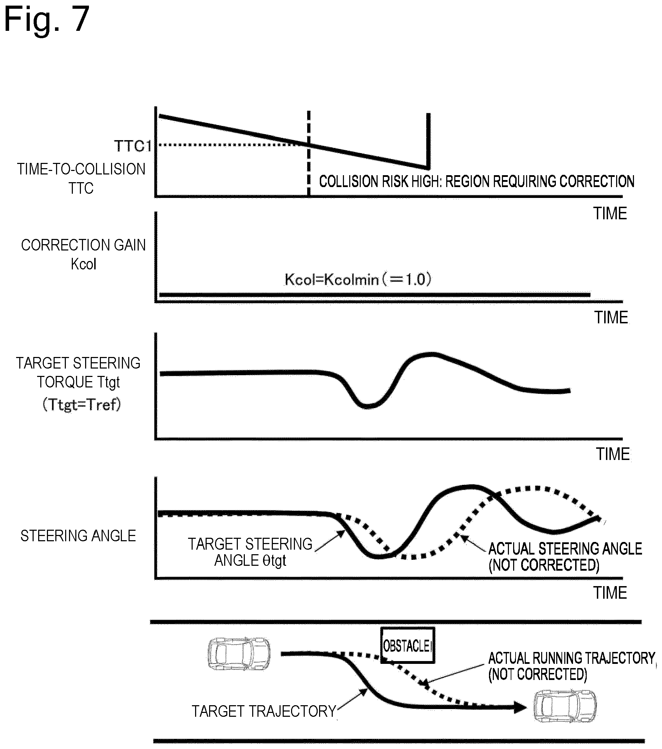

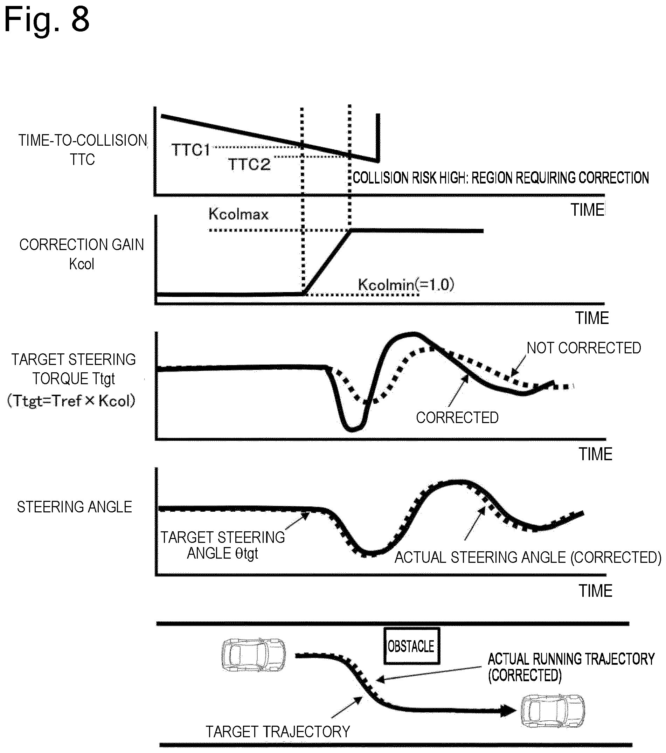

Figs. 7 and 8 are timing charts for illustrating differences in the steering torque and the steering angle according to whether the correction using the correction gain Kcol is carried out or not.

Fig. 7 illustrates changes in the steering torque and the steering angle in the case where the correction using the correction gain Kcol is not carried out with the target steering torque reference value Tref directly set as the target steering torque Ttgt.

On the other hand, Fig. 8 illustrates changes in the steering torque and the steering angle in the case where the correction using the correction gain Kcol is carried out with the target steering torque Ttgt calculated according to the equation 9.

In the case where the correction using the correction gain Kcol is not carried out illustrated in Fig. 7, the target steering torque Ttgt is not amplified even when the collision risk increases, and this causes a response delay in the actually generated steering angle behind the precipitous change in the target steering angle θtgt for avoiding the collision, and causes a delay in the response of the actual lateral movement behind the target trajectory for avoiding the collision, thereby reducing the collision avoidability.

On the other hand, in the case where the correction using the correction gain Kcol is carried out illustrated in Fig. 8, the target steering torque Ttgt is amplified with use of the correction gain Kcol when the time-to-collision TTC reduces and the collision risk increases, and this prevents the response delay in the actually generated steering angle behind the precipitous change in the target steering angle θtgt for avoiding the collision and allows the vehicle 1 to move laterally so as to follow the target trajectory for avoiding the collision, thereby improving the collision avoidability.

"Second Embodiment"

The control apparatus 11 can be equipped with a function of correcting the target steering torque Ttgt according to a change in a front wheel load according to braking (deceleration).

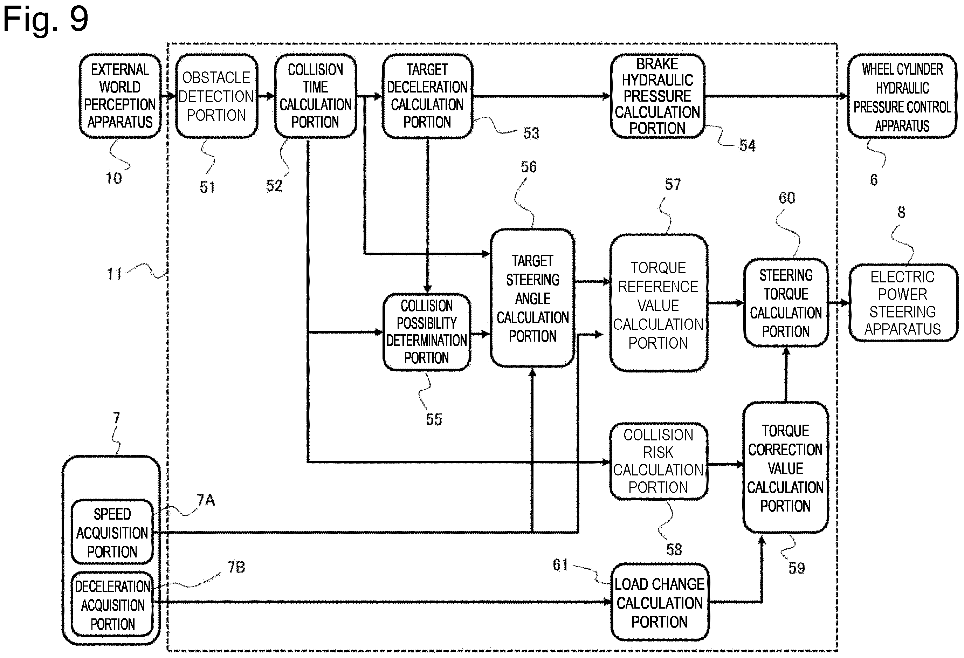

Fig. 9 is a functional block diagram of the control apparatus 11 according to a second embodiment that is equipped with the function of correcting the target steering torque Ttgt according to the collision risk and the change in the front wheel load.

If the wheel loads of the front wheels 2L and 2R, which are the steered wheels of the vehicle 1, increase due to the braking for avoiding the collision, the steering responsiveness may reduce and the collision avoidability may reduce unless a steering torque is additionally provided by an amount corresponding to the increase in the front wheel load.

Therefore, the control apparatus 11 according to the second embodiment illustrated in Fig. 9 is equipped with the function of correcting the target steering torque Ttgt according to the change in the front wheel load, thereby preventing the reduction in the collision avoidability according to the change in the front wheel load.

In the following description, the configuration of the control apparatus 11 illustrated in Fig. 9 will be described. The configuration of this control apparatus 11 will be described, indicating functional blocks similar to Fig. 2 by the same reference numerals as Fig. 2 and omitting the detailed descriptions thereof, and mainly focusing on functional portions added to the configuration illustrated in Fig. 2.

The control apparatus 11 illustrated in Fig. 9 includes a load change calculation portion 61 in addition to the configuration in the functional block diagram illustrated in Fig. 2.

The load change calculation portion 61 calculates the change in the front wheel load according to the braking based on, for example, information about the deceleration of the vehicle 1 that is acquired from a deceleration acquisition portion 7B of the vehicle information acquisition apparatus 7.

Then, the torque correction value calculation portion 59 sets the correction gain Kcol according to the time-to-collision TTC similarly to the first embodiment, and, along therewith, sets a correction gain Kfl, which is a torque correction value for correcting the target steering torque reference value Tref according to the change in the front wheel load, which is the specifications regarding the running of the vehicle 1.

The steering torque calculation portion 60 sets a result of correcting the target steering torque reference value Tref with use of the correction gain Kcol and the correction gain Kfl as the final target steering torque Ttgt, and outputs the information regarding the target steering torque Ttgt to the electric power steering apparatus 8.

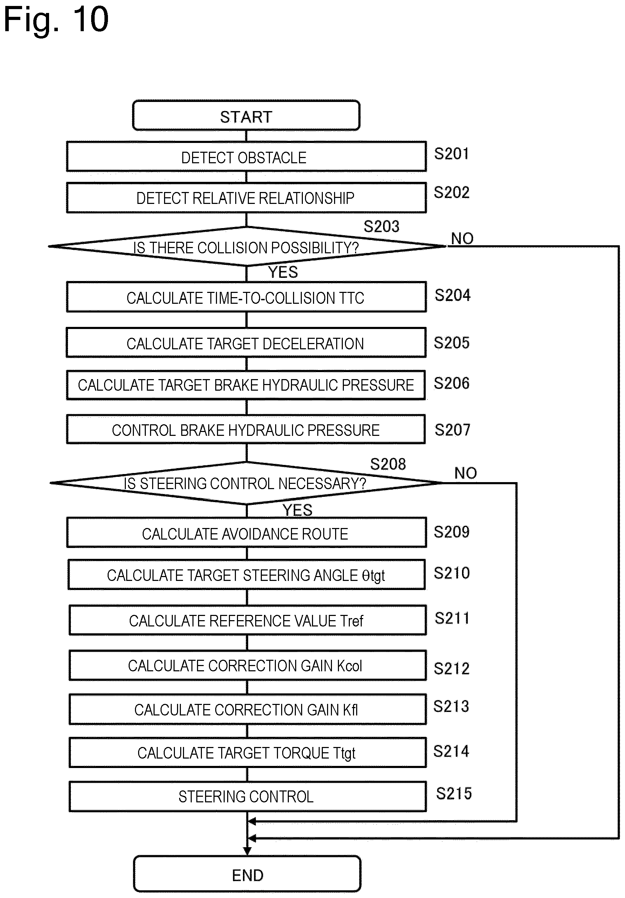

The flowchart in Fig. 10 is a flowchart illustrating a procedure of the braking control and the steering control for avoiding the collision by the control apparatus 11 illustrated in Fig. 9.

The control apparatus 11 performs similar processing in step S201 to step S212 in the flowchart in Fig. 10 to step S101 to step S112 in the flowchart in Fig. 3, and therefore the detailed descriptions about step S201 to step S212 will be omitted here.

After calculating the correction gain Kcol based on the time-to-collision TTC (the collision risk) in step S212 (the torque correction value calculation portion 59), in the next step, step S213 (the torque correction value calculation portion 59), the control apparatus 11 identifies the change in the front wheel load (an increase amount) based on the deceleration and the like and calculates the correction gain Kfl based on the identified change in the front wheel load.

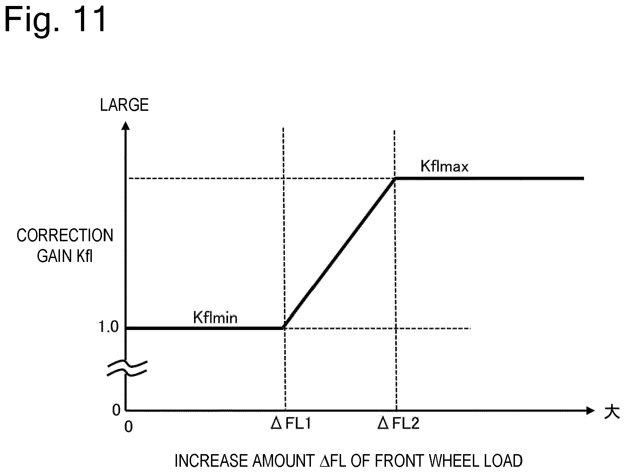

Fig. 11 illustrates one exemplary content of a map that the control apparatus 11 uses to calculate the correction gain Kfl in step S213, and indicates the correlation between an increase amount ΔFL of a front wheel load FL according to the braking for avoiding the collision, and the correction gain Kfl.

In the map illustrated in Fig. 11, the correction gain Kfl is set to a minimum value Kflmin when the increase amount ΔFL is equal to or smaller than a first increase amount ΔFL1 (ΔFL1 > 0), under which the influence of the increase amount ΔFL of the front wheel load FL according to the braking for avoiding the collision that is exerted on the steering response is predicted to be sufficiently small.

For example, assume that the minimum value Kflmin is 1.0, which is a value that does not correct the target steering torque reference value Tref actually.

When the increase amount ΔFL exceeds the first increase amount ΔFL, and the increase amount ΔFL of the front wheel load FL according to the braking for avoiding the collision enters a region that leads to a reduction in the steering response, the correction gain Kfl proportionally increases as the increase amount ΔFL increases.

Then, the correction gain Kfl reaches a maximum value Kflmax (Kflmin < Kflmax) when the increase amount ΔFL increases as far as a second increase amount ΔFL2 (ΔFL2 > ΔFL1), and is kept at the maximum value Kflmax when the increase amount ΔFL is equal to or larger than the second increase amount ΔFL2.

In other words, the control apparatus 11 increases the correction gain Kfl as the torque correction value as the load change of the front wheel increases in the direction that the front wheel load increases, and changes the steering torque for avoiding the collision to a further high value.

Now, the second increase amount ΔFL2 and the maximum value Kflmax are adapted so as to be able to sufficiently reduce the steering delay with the aid of the amplification correction of the target steering torque Ttgt and realize the collision avoidance with the aid of the lateral movement of the vehicle 1 based on the steering control when the increase amount ΔFL of the front wheel load FL may cause a reduction in the steering response.

However, the correlation between the increase amount ΔFL of the front wheel load FL and the correction gain Kfl is not limited to the correlation exemplified in Fig. 11, and may be any characteristic that brings about a further amplification change of the final target steering torque Ttgt according to an increase in the increase amount ΔFL.

After calculating the correction gain Kfl in step S213, in the next step, step S214 (the steering torque calculation portion 60), the control apparatus 11 calculates the final target steering torque Ttgt based on the target steering torque reference value Tref, the correction gain Kcol, and the correction gain Kfl according to an equation 10.

[Equation 10]

$$T_{tgt} = T_{ref} \times K_{col} \times K_{fl}$$

Then, in the next step, step S215, the control apparatus 11 outputs the torque instruction (the steering torque instruction) for achieving the target steering torque Ttgt to the electric power steering apparatus 8.

The electric power steering apparatus 8 performs the steering control based on the instruction indicating the target steering torque Ttgt to allow the angle of the steering wheel 9 to reach the target steering angle θtgt, thereby causing the vehicle 1 to move laterally by the lateral movement amount LM necessary to avoid the collision.

According to the above-described second embodiment, the control apparatus 11 calculates the final target steering torque Ttgt by correcting the target steering torque reference value Tref using the correction gain Kcol based on the collision risk (the time-to-collision TTC) and the correction gain Kfl based on the increase amount ΔFL of the front wheel load FL.

As a result, the control apparatus 11 can amplify the steering torque to improve the steering responsiveness to the precipitous change in the target steering angle θtgt when the collision risk increases, and, further, can prevent the reduction in the steering responsiveness due to insufficiency of the steering torque when the front wheel load increases due to the braking for avoiding the collision, thereby improving the collision avoidability based on the steering control.

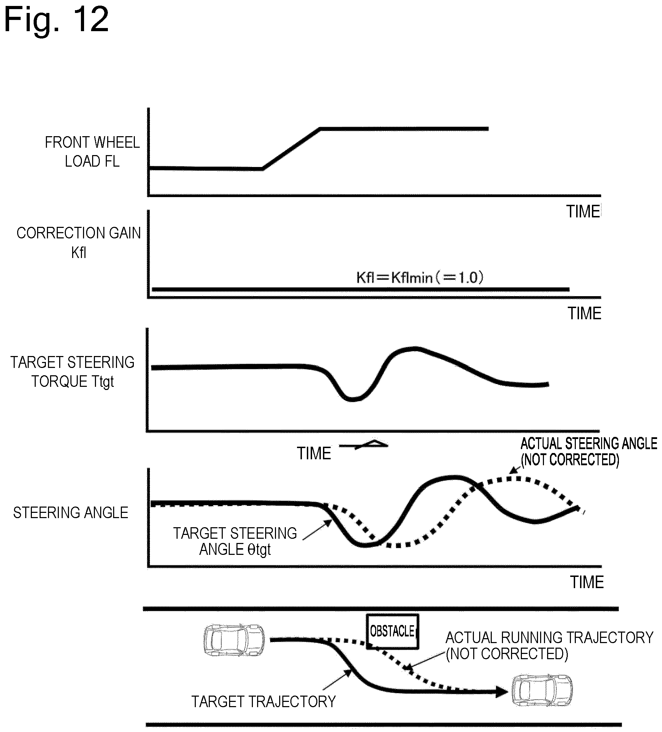

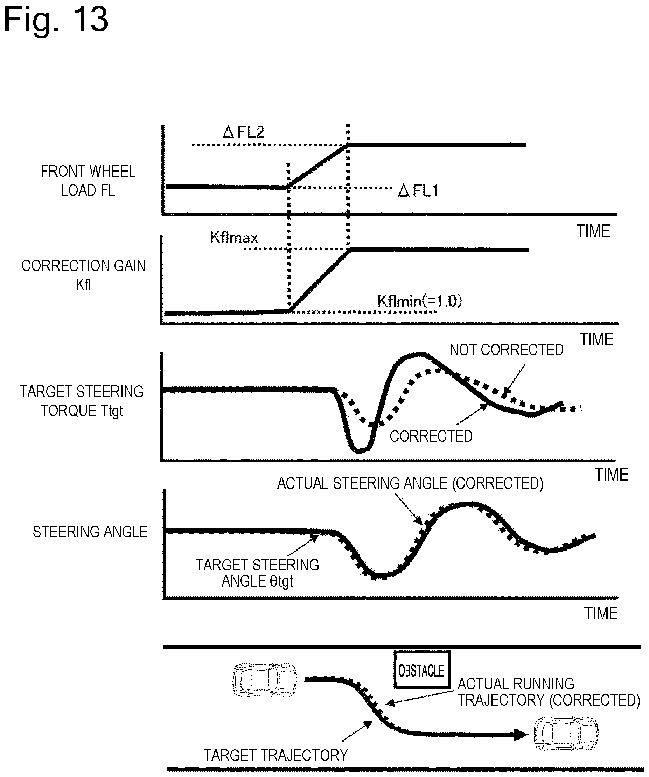

Figs. 12 and 13 are timing charts for illustrating differences in the steering torque and the steering angle according to whether the correction using the correction gain Kfl is carried out or not.

Fig. 12 illustrates changes in the steering torque and the steering angle in the case where the target steering torque Ttgt is determined without the correction carried out using the correction gain Kfl, and Fig. 13 illustrates changes in the steering torque and the steering angle in the case where the target steering torque Ttgt is determined with the correction carried out using the correction gain Kfl.

In the case where the correction using the correction gain Kfl is not carried out illustrated in Fig. 12, the target steering torque Ttgt is not amplified even when the front wheel load FL increases according to the braking control for avoiding the collision, and this causes a delay in the steering response and causes a delay in the response of the actual lateral movement behind the target trajectory for avoiding the collision, thereby reducing the collision avoidability.

On the other hand, in the case where the correction using the correction gain Kfl is carried out illustrated in Fig. 13, the target steering torque Ttgt is amplified with use of the correction gain Kfl by an amount corresponding to the increase in the front wheel load FL when the front wheel load FL increases due to the braking for avoiding the collision, and this prevents the delay in the steering response and allows the vehicle 1 to move laterally so as to follow the target trajectory for avoiding the collision, thereby improving the collision avoidability.

"Third Embodiment"

Further, the control apparatus 11 can be equipped with a function of correcting the target steering torque Ttgt according to a change in the weight of the vehicle 1.

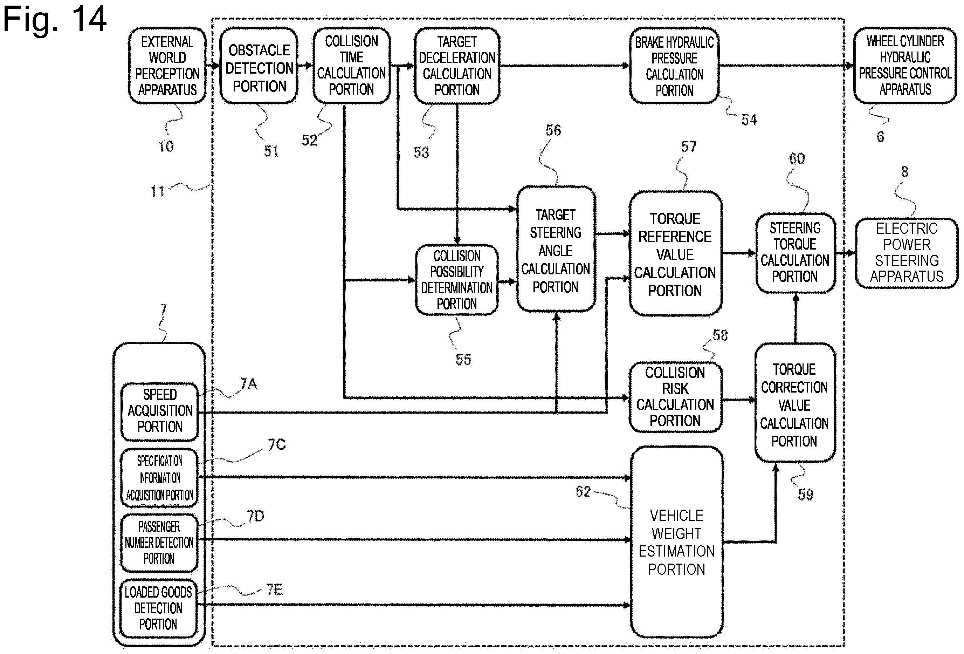

Fig. 14 is a functional block diagram of the control apparatus 11 according to a third embodiment that is equipped with the function of correcting the target steering torque Ttgt according to the collision risk and the change in the weight of the vehicle 1.

In a case where the weight of the vehicle 1 increases over a reference value because, for example, the number of passengers on the vehicle 1 increases or the number of loaded goods on the vehicle 1 increases, the tire is subjected to the influence of the vertical load, and therefore the steering responsiveness may reduce and the collision avoidability may reduce unless an extra steering torque is applied by an amount corresponding to the increase in the vehicle weight over the reference value.

Therefore, the control apparatus 11 illustrated in Fig. 14 prevents the reduction in the collision avoidability due to the change in the weight of the vehicle 1 by amplifying the target steering torque Ttgt by the amount corresponding to the increase in the vehicle weight over the reference value when the weight of the vehicle 1 increases over the reference value.

The reference value of the vehicle weight is, for example, a vehicle weight used to adapt the target steering torque reference value Tref.

In the following description, the configuration of the control apparatus 11 illustrated in Fig. 14 will be described. The configuration of this control apparatus 11 will be described, indicating functional blocks similar to Fig. 2 by the same reference numerals as Fig. 2 and omitting the detailed descriptions thereof, and mainly focusing on functional portions added to the configuration illustrated in Fig. 2.

The control apparatus 11 illustrated in Fig. 14 includes a vehicle weight estimation portion 62 in addition to the configuration in the functional block diagram illustrated in Fig. 2.

The vehicle weight estimation portion 62 estimates the change in the weight of the vehicle 1, more specifically, the increase in the vehicle weight over the reference value based on information from a specification information acquisition portion 7C, a passenger number detection portion 7D, and a loaded goods detection portion 7E of the vehicle information acquisition apparatus 7.

The specification information acquisition portion 7C acquires information about the vehicle weight as the specifications of the vehicle, and outputs the acquired information about the vehicle weight to the vehicle weight estimation portion 62.

The passenger number detection portion 7D detects the number of passengers NC of the vehicle 1, i.e., the number of people riding on the vehicle 1 with use of a seating sensor or the like, and outputs information about the detected number of passengers NC to the vehicle weight estimation portion 62.

The loaded goods detection portion 7E detects information regarding the loaded goods on the vehicle 1 (information such as the number and weight of loaded goods), and outputs the detected information about the loaded goods to the vehicle weight estimation portion 62.

The passenger number detection portion 7D and/or the loaded goods detection portion 7E can acquire the information regarding the passengers and/or the loaded goods transmitted by a passenger or the like of the vehicle 1 via a human-machine interface.

Then, the vehicle weight estimation portion 62 estimates an increase amount ΔVW [kg] of the vehicle weight over the reference value based on the number of passengers, the loaded goods, the vehicle weight as the specifications of the vehicle, and the like.

The vehicle weight estimation portion 62 can determine the increase amount ΔVW of the vehicle weight over the reference value of the vehicle weight based on the vehicle weight measured by a vehicle weight measurement apparatus such as the example disclosed in Japanese Patent No. 6501048.

The torque correction value calculation portion 59 sets the correction gain Kcol according to the collision risk (the time-to-collision TTC) similarly to the first embodiment, and, along therewith, sets a correction gain Kwt, which is a toque correction value for correcting the target steering torque reference value Tref according to the increase amount ΔVW of the vehicle weight (i.e., the change in the weight of the vehicle 1), which is the specifications regarding the running of the vehicle 1.

At this time, the torque correction value calculation portion 59 increases the correction gain Kwt as the increase amount ΔVW of the vehicle weight increases.

The steering torque calculation portion 60 sets a result of correcting the target steering torque reference value Tref with use of the correction gain Kcol and the correction gain Kwt as the final target steering torque Ttgt, and outputs the information regarding the target steering torque Ttgt to the electric power steering apparatus 8.

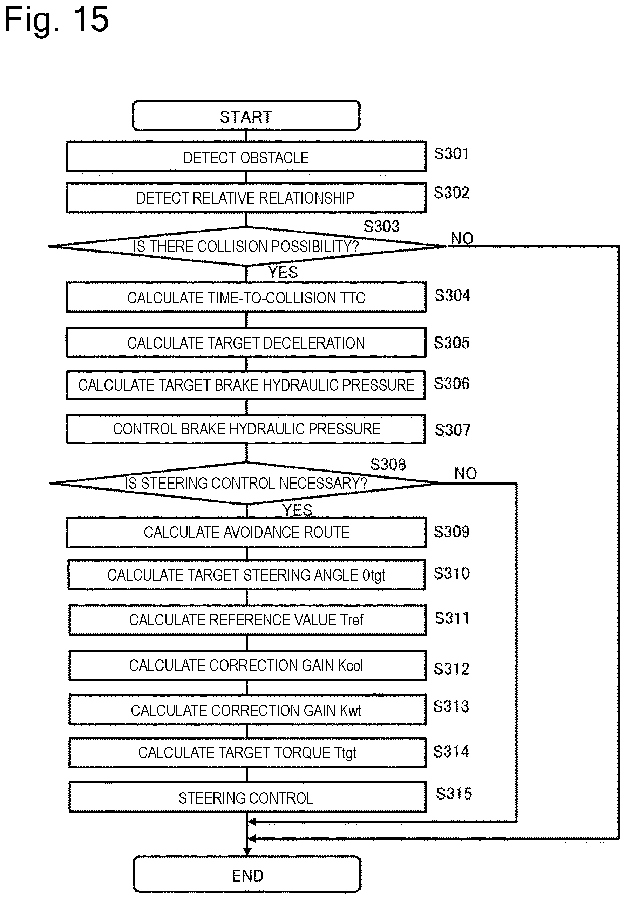

The flowchart in Fig. 15 is a flowchart illustrating a procedure of the braking control and the steering control for avoiding the collision by the control apparatus 11 illustrated in Fig. 14.

The control apparatus 11 performs similar processing in step S301 to step S312 in the flowchart in Fig. 15 to step S101 to step S112 in the flowchart in Fig. 3, and therefore the detailed descriptions about step S301 to step S312 will be omitted here.

After calculating the correction gain Kcol based on the collision risk (the time-to-collision TTC) in step S312 (the torque correction value calculation portion 59), in the next step, step S313 (the torque correction value calculation portion 59), the control apparatus 11 calculates the correction gain Kwt based on the increase amount ΔVW of the vehicle weight.

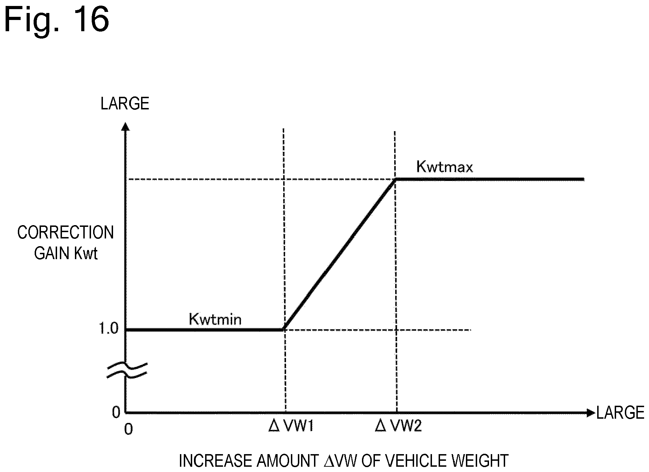

Fig. 16 illustrates one exemplary content of a map that the control apparatus 11 uses to calculate the correction gain Kwt in step S313, and indicates the correlation between the increase amount ΔVW of the vehicle weight and the correction gain Kwt.

In the map illustrated in Fig. 16, the correction gain Kwt is set to a minimum value Kwtmin when the increase amount ΔVW is equal to or smaller than a first increase amount ΔVW1 (ΔVW1 > 0), under which the influence of the change in the vehicle weight that is exerted on the steering response is predicted to be sufficiently small.

For example, assume that the minimum value Kwtmin is 1.0, which is a value that does not correct the target steering torque reference value Tref actually.

Then, the correction gain Kwt proportionally increases as the increase amount ΔVW increases when the increase amount ΔVW exceeds the first increase amount ΔVW1, and the correction gain Kwt reaches a maximum value Kwtmax (Kwtmin < Kwtmax) when the increase amount ΔVW increases as far as a second increase amount ΔVW2 (ΔVW2 > ΔVW1) and is kept at the maximum value Kwtmax when the increase amount ΔVW is equal to or larger than the second increase amount ΔVW2.

In other words, the control apparatus 11 increases the correction gain Kwt as the torque correction value as the change in the weight of the vehicle 1 increases in the direction that the weight of the vehicle 1 increases, and further amplifies the steering torque for avoiding the collision.

Now, the maximum value Kwtmax of the correction gain Kwt and the second increase amount ΔVW2 are adapted so as to be able to sufficiently reduce the steering delay with the aid of the amplification correction of the target steering torque Ttgt and realize the collision avoidance with the aid of the lateral movement of the vehicle 1 based on the steering control when the increase in the vehicle weight may cause a reduction in the steering response.

However, the correlation between the increase amount ΔVW of the vehicle weight and the correction gain Kwt is not limited to the correlation exemplified in Fig. 16, and may be any characteristic that brings about an amplification change of the final target steering torque Ttgt according to an increase in the increase amount ΔVW

After calculating the correction gain Kwt in step S313, in the next step, step S314 (the steering torque calculation portion 60), the control apparatus 11 calculates the final target steering torque Ttgt based on the target steering torque reference value Tref, the correction gain Kcol, and the correction gain Kwt according to an equation 11.

[Equation 11]

$$T_{tgt} = T_{ref} \times K_{col} \times K_{wt}$$

Then, in the next step, step S315, the control apparatus 11 outputs the torque instruction (the steering torque instruction) for achieving the target steering torque Ttgt to the electric power steering apparatus 8.

The electric power steering apparatus 8 performs the steering control based on the instruction indicating the target steering torque Ttgt to allow the angle of the steering wheel 9 to reach the target steering angle θtgt, thereby causing the vehicle 1 to move laterally by the lateral movement amount LM necessary to avoid the collision.

According to the above-described third embodiment, the control apparatus 11 calculates the final target steering torque Ttgt by correcting the target steering torque reference value Tref using the correction gain Kcol based on the collision risk (the time-to-collision TTC) and the correction gain Kwt based on the increase amount ΔVW of the vehicle weight.

As a result, the control apparatus 11 can amplify the steering torque to improve the steering responsiveness to the precipitous change in the target steering angle θtgt when the collision risk increases, and, further, can prevent the reduction in the steering responsiveness due to insufficiency of the steering torque when the vehicle weight increases due to an increase in the number of passengers or loading of baggage, thereby improving the collision avoidability based on the steering control.

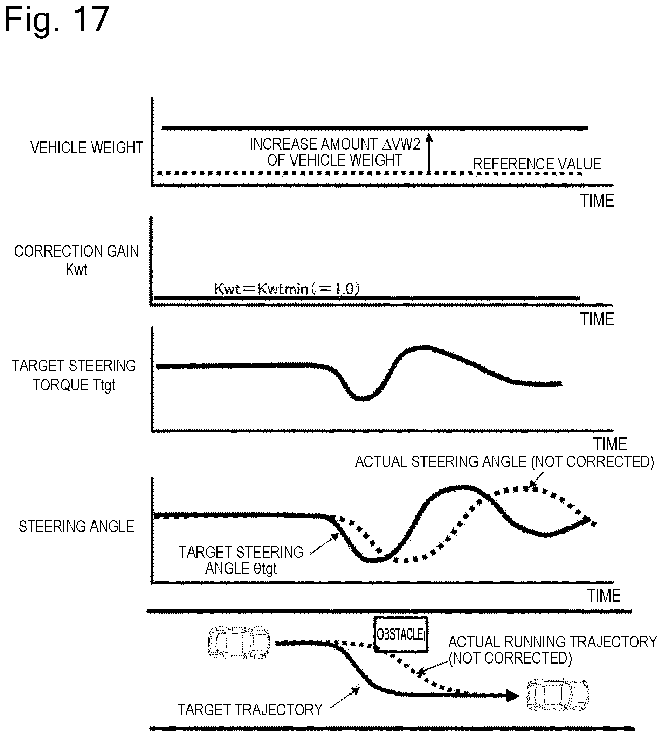

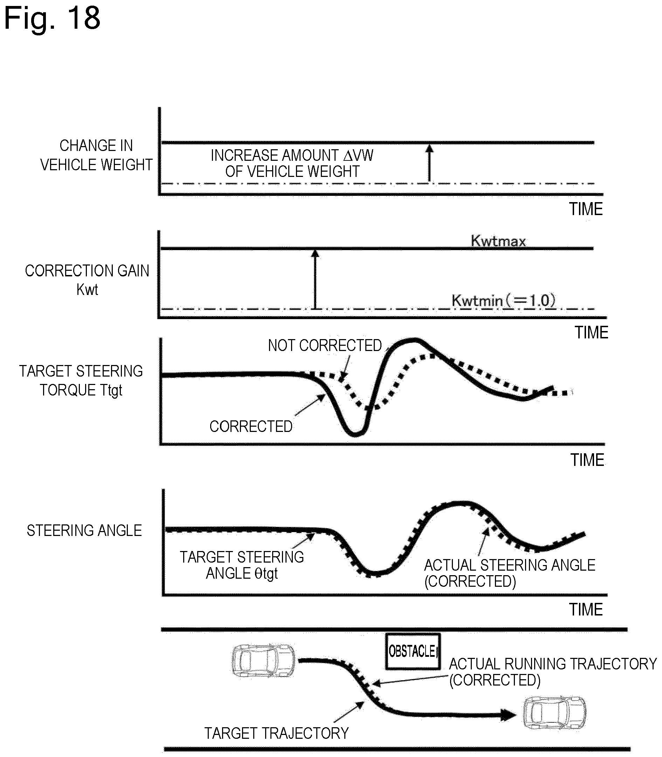

Figs. 17 and 18 are timing charts for illustrating differences in the steering torque and the steering angle according to whether the correction using the correction gain Kwt is carried out or not.

Fig. 17 illustrates changes in the steering torque and the steering angle in the case where the target steering torque Ttgt is determined without the correction carried out using the correction gain Kwt, and Fig. 18 illustrates changes in the steering torque and the steering angle in the case where the target steering torque Ttgt is determined with the correction carried out using the correction gain Kwt.

In the case where the correction using the correction gain Kwt is not carried out illustrated in Fig. 17, the target steering torque Ttgt is not amplified even when the vehicle weight increases due to an increase in the number of passengers or loading of baggage, and this causes a delay in the steering response and causes a delay in the response of the actual lateral movement behind the target trajectory for avoiding the collision, thereby reducing the collision avoidability.

On the other hand, in the case where the correction using the correction gain Kwt is carried out illustrated in Fig. 18, the target steering torque Ttgt is amplified with use of the correction gain Kwt by an amount corresponding to the increase in the vehicle weight when the vehicle weight increases due to an increase in the number of passengers or loading of baggage, and this prevents the delay in the response of the steering angle and allows the vehicle 1 to move laterally so as to follow the target trajectory for avoiding the collision, thereby improving the collision avoidability.

"Fourth Embodiment"

Further, the control apparatus 11 can be equipped with a function of correcting the target steering torque Ttgt according to a frictional coefficient μ of the road surface on which the vehicle 1 runs.

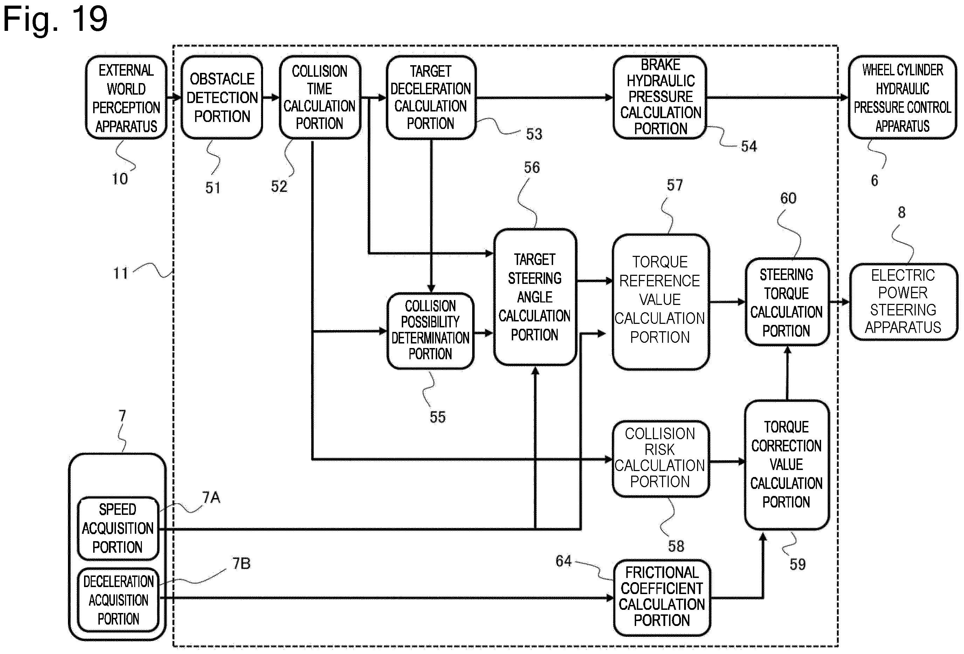

Fig. 19 is a functional block diagram of the control apparatus 11 according to a fourth embodiment that is equipped with the function of correcting the target steering torque Ttgt according to the frictional coefficient μ of the road surface.

When the frictional coefficient μ of the road surface reduces due to, for example, a rainfall or a snowfall, the self-aligning torque reduces, and therefore the steering torque becomes excessive for the self-aligning torque if the control apparatus 11 sets the target steering torque Ttgt similar to when the frictional coefficient μ of the road surface is high.

Then, when the steering torque becomes excessive for the self-aligning torque, the actual steering angle exceeds the target steering angle θtgt and a tire sideslip occurs, by which a cornering force reduces.

Therefore, a reduction in the frictional coefficient μ of the road surface may make it impossible for the vehicle 1 to follow the target trajectory for avoiding the collision, thereby resulting in a reduction in the collision avoidability.

Therefore, the control apparatus 11 illustrated in Fig. 19 keeps the target steering torque Ttgt at a low value when the frictional coefficient μ of the road surface is low compared to when the frictional coefficient μ of the road surface is high, thereby preventing the reduction in the collision avoidability when the vehicle 1 runs on the road surface where the frictional coefficient μ is low.

In the following description, the configuration of the control apparatus 11 illustrated in Fig. 19 will be described. The configuration of this control apparatus 11 will be described, indicating functional blocks similar to Fig. 2 by the same reference numerals as Fig. 2 and omitting the detailed descriptions thereof, and mainly focusing on functional portions added to the configuration illustrated in Fig. 2.

The control apparatus 11 illustrated in Fig. 19 includes a frictional coefficient calculation portion 64 in addition to the configuration in the functional block diagram illustrated in Fig. 2.

The frictional coefficient calculation portion 64 calculates the frictional coefficient μ of the road surface on which the vehicle 1 runs, i.e., the road surface that each of the wheels 2L, 2R, 3L, and 3R of the vehicle 1 is in contact with.

The frictional coefficient calculation portion 64, for example, acquires information regarding the deceleration of the vehicle 1 when the braking for avoiding the collision is applied from the deceleration acquisition portion 7B of the vehicle information acquisition apparatus 7, and calculates the frictional coefficient μ of the road surface based on the acquired information regarding the deceleration.

The frictional coefficient calculation portion 64 can calculate the frictional coefficient μ by acquiring, for example, information regarding the frictional coefficient μ of the road surface that is wirelessly transmitted from outside the vehicle 1.

The torque correction value calculation portion 59 sets the correction gain Kcol according to the collision risk (the time-to-collision TTC) similarly to the first embodiment, and, along therewith, sets a correction gain Kmu, which is a torque correction value for correcting the target steering torque reference value Tref according to the frictional coefficient μ of the road surface, which is the specifications regarding the running of the vehicle 1.

The steering torque calculation portion 60 sets a result of correcting the target steering torque reference value Tref with use of the correction gain Kcol and the correction gain Kmu as the final target steering torque Ttgt, and outputs the information regarding the target steering torque Ttgt to the electric power steering apparatus 8.

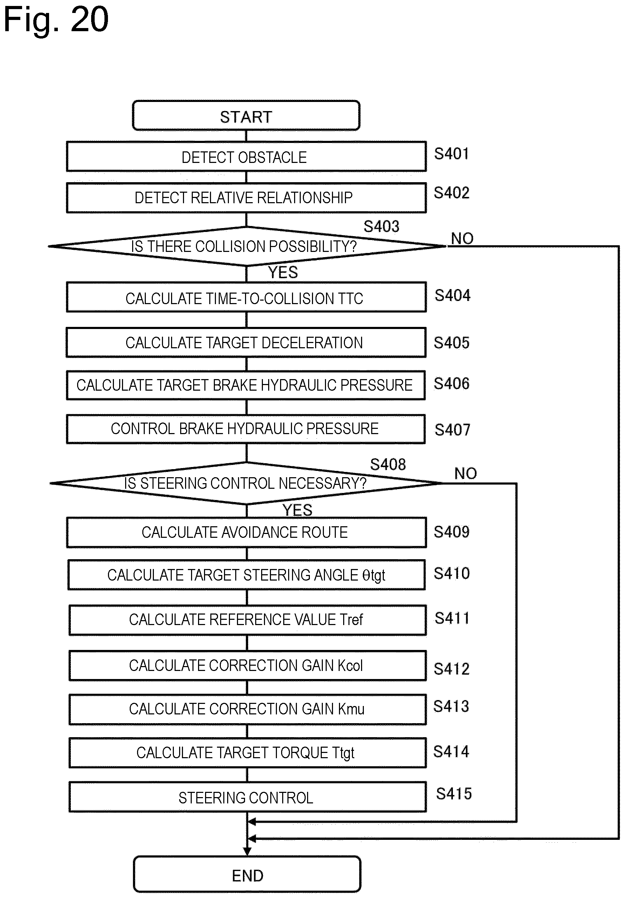

The flowchart in Fig. 20 is a flowchart illustrating a procedure of the braking control and the steering control for avoiding the collision by the control apparatus 11 illustrated in Fig. 19.

The control apparatus 11 performs similar processing in step S401 to step S412 in the flowchart in Fig. 20 to step S101 to step S112 in the flowchart in Fig. 3, and therefore the detailed descriptions about step S401 to step S412 will be omitted here.

After calculating the correction gain Kcol based on the collision risk (the time-to-collision TTC) in step S412 (the torque correction value calculation portion 59), in the next step, step S413 (the torque correction value calculation portion 59), the control apparatus 11 calculates the correction gain Kmu based on the frictional coefficient μ of the road surface on which the vehicle 1 runs.

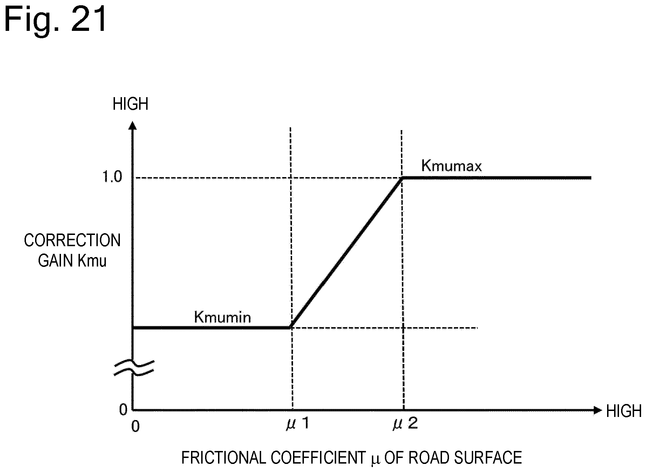

Fig. 21 illustrates one exemplary content of a map that the control apparatus 11 uses to calculate the correction gain Kmu in step S413, and indicates the correlation between the frictional coefficient μ of the road surface on which the vehicle 1 runs, and the correction gain Kmu.

In the map illustrated in Fig. 21, a region where the frictional coefficient μ is equal to or higher than a second frictional coefficient μ2 is a region where the target steering torque reference value Tref does not become excessive for the self-aligning torque (i.e., a dry road surface region), and the correction gain Kmu is set to a maximum value Kmumax in the region where the frictional coefficient μ is equal to or higher than the second frictional coefficient μ2.

For example, assume that the maximum value Kmumax is 1.0, which is a value that does not correct the target steering torque reference value Tref actually.

Then, when the frictional coefficient μ enters a region where the frictional coefficient μ is lower than the second frictional coefficient μ2, i.e., a region where the target steering torque reference value Tref becomes excessive for the self-aligning torque, the correction gain Kmu proportionally reduces as the frictional coefficient μ reduces. The correction gain Kmu reaches a minimum value Kmumin (0 < Kmumin < Kmumax) when the frictional coefficient μ reaches as far as a first frictional coefficient μ1 lower than the second frictional coefficient μ2, and is kept at the minimum value Kmumin when the frictional coefficient μ is equal to or lower than the first frictional coefficient μ1.

Now, when the maximum value Kmumax is assumed to be, for example, 1.0, the minimum value Kmumin is set to a value smaller than 1.0 (0 < Kmumin < 1.0).

In this manner, the correction gain Kmu is set so as to reduce to correct the target steering torque reference value Tref to a lower value according to the reduction in the frictional coefficient μ of the road surface on which the vehicle 1 runs, and corrects the target steering torque reference value Tref so as to prevent the steering torque from becoming excessive for the self-aligning torque when the frictional coefficient μ is low.

In other words, the control apparatus 11 increases the correction gain Kmu as the torque correction value to change the steering torque for avoiding the collision to a further high torque, as the frictional coefficient μ of the road surface increases.

However, the correlation between the frictional coefficient μ of the road surface and the correction gain Kmu is not limited to the correlation exemplified in Fig. 21, and may be any characteristic that brings about a further amplification change of the final target steering torque Ttgt according to an increase in the frictional coefficient μ.

After calculating the correction gain Kmu in step S413, in the next step, step S414 (the steering torque calculation portion 60), the control apparatus 11 calculates the final target steering torque Ttgt based on the target steering torque reference value Tref, the correction gain Kcol, and the correction gain Kmu according to an equation 12.

[Equation 12]

$$T_{tgt} = T_{ref} \times K_{col} \times K_{mu}$$

Then, in the next step, step S415, the control apparatus 11 outputs the torque instruction (the steering torque instruction) for achieving the target steering torque Ttgt to the electric power steering apparatus 8.

The electric power steering apparatus 8 performs the steering control based on the instruction indicating the target steering torque Ttgt to allow the angle of the steering wheel 9 to reach the target steering angle θtgt, thereby causing the vehicle 1 to move laterally by the lateral movement amount LM necessary to avoid the collision.

According to the above-described fourth embodiment, the control apparatus 11 calculates the final target steering torque Ttgt by correcting the target steering torque reference value Tref using the correction gain Kcol based on the collision risk (the time-to-collision TTC) and the correction gain Kmu based on the frictional coefficient μ of the road surface.

As a result, the control apparatus 11 can amplify the steering torque to improve the steering responsiveness to the precipitous change in the target steering angle θtgt when the collision risk increases, and, further, can prevent the reduction in the collision avoidability due to an excessive increase in the steering torque for the self-aligning torque and thus a reduction in the cornering force when the frictional coefficient μ of the road surface is low, thereby improving the collision avoidability based on the steering control.

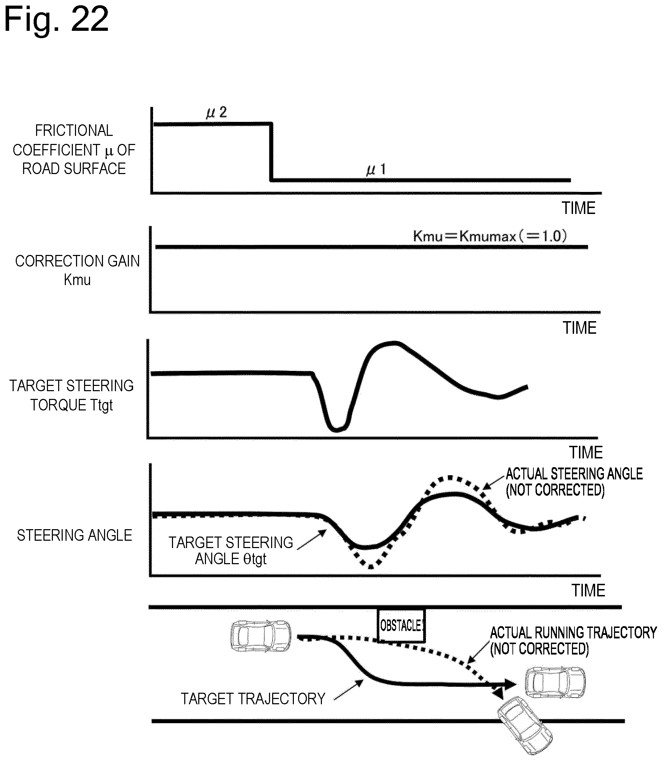

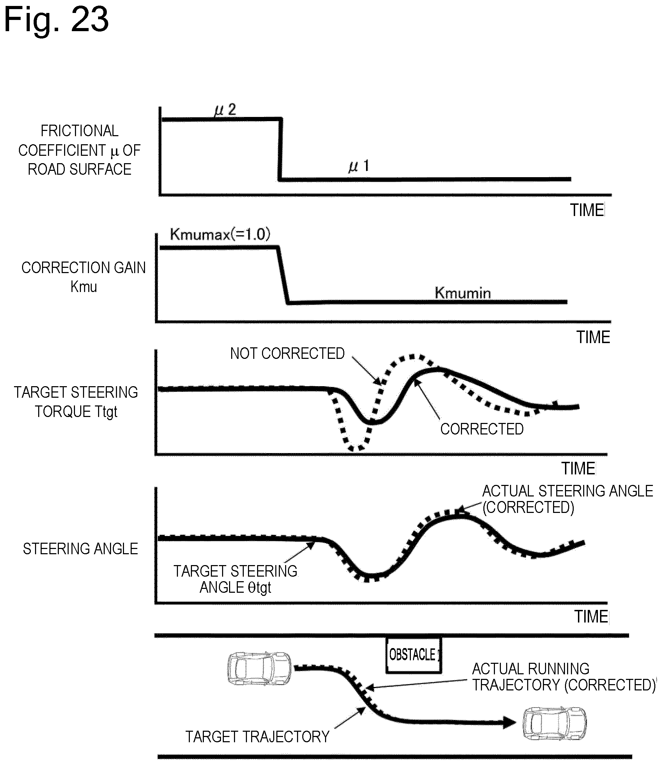

Figs. 22 and 23 are timing charts for illustrating differences in the steering torque and the steering angle according to whether the correction using the correction gain Kmu is carried out or not.

Fig. 22 illustrates changes in the steering torque and the steering angle in the case where the target steering torque Ttgt is determined without the correction carried out using the correction gain Kmu, and Fig. 23 illustrates changes in the steering torque and the steering angle in the case where the target steering torque Ttgt is determined with the correction carried out using the correction gain Kmu.

The frictional coefficient μ illustrated in Figs. 22 and 23 is not the actual frictional coefficient μ of the road surface but is an estimated value that the control apparatus 11 acquires based on the deceleration of the vehicle 1, and indicates how the estimated value is updated based on the deceleration when the braking for avoiding the collision is applied and is changing in a stepwise manner.

In the case where the correction using the correction gain Kmu is not carried out, the control apparatus 11 does not correct the target steering torque Ttgt so as to reduce it even when the frictional coefficient μ of the road surface on which the vehicle 1 runs is lower than a reference frictional coefficient μ, which is a condition for adapting the target steering torque reference value Tref, as illustrated in Fig. 22.

Therefore, when the frictional coefficient μ of the road surface on which the vehicle 1 runs is lower than the reference, this causes the steering torque to become excessive for the self-aligning torque and the cornering force to reduce to then fall below a predetermined force, thereby deteriorating the followability to the target steering angle θtgt and reducing the collision avoidability.

On the other hand, in the case where the correction using the correction gain Kmu is carried out, when the frictional coefficient μ of the road surface is lower than the reference frictional coefficient μ, the control apparatus 11 changes the correction gain Kmu so as to reduce it and corrects the target steering torque Ttgt so as to reduce it with use of the correction gain Kmu as illustrated in Fig. 23, thereby being able to prevent the steering torque from becoming excessive for the self-aligning torque and the cornering force from reducing.

Therefore, in the case where the correction using the correction gain Kmu is carried out, even when the frictional coefficient μ of the road surface falls below the reference frictional coefficient μ, the control apparatus 11 can prevent the deterioration of the followability to the target steering angle θtgt and allow the vehicle 1 to move laterally along the target trajectory for avoiding the collision, thereby improving the collision avoidability based on the steering control.

"Fifth Embodiment"

Further, the control apparatus 11 can correct the target steering torque Ttgt according to the collision risk, the change in the load of the front wheel, the change in the weight of the vehicle 1, and the frictional coefficient of the road surface.

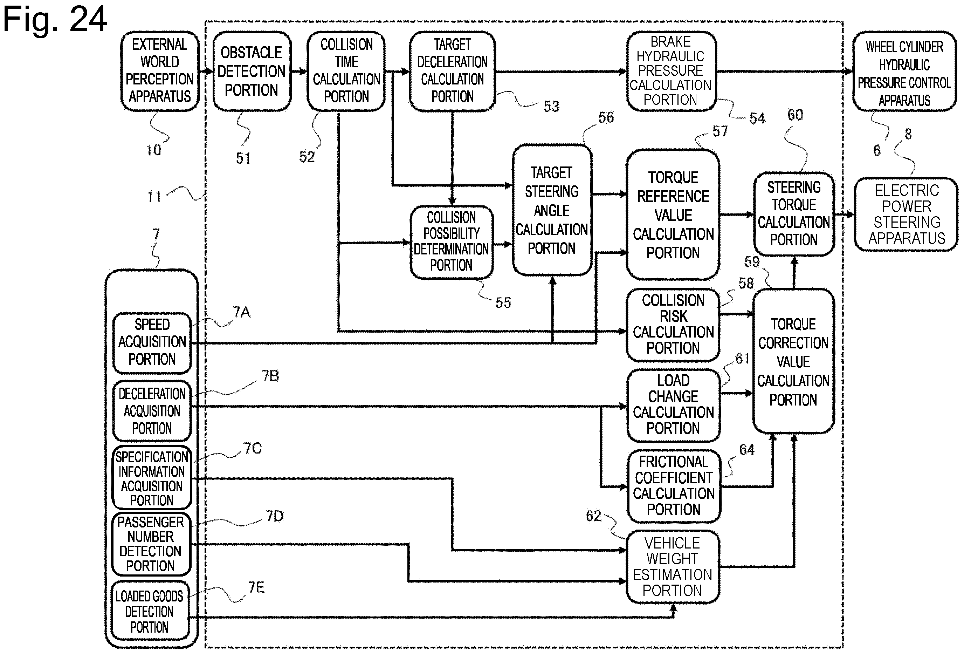

Fig. 24 is a functional block diagram of the control apparatus 11 according to a fifth embodiment that is equipped with the function of correcting the target steering torque Ttgt according to the collision risk, the change in the load of the front wheel, the change in the weight of the vehicle 1, and the frictional coefficient of the road surface.

In the following description, the configuration of the control apparatus 11 illustrated in Fig. 24 will be described.

The configuration of this control apparatus 11 will be described, indicating functional blocks similar to Fig. 2 by the same reference numerals as Fig. 2 and omitting the detailed descriptions thereof, and mainly focusing on functional portions added to the configuration illustrated in Fig. 2.

The control apparatus 11 illustrated in Fig. 24 includes the load change calculation portion 61, the vehicle weight estimation portion 62, and the frictional coefficient calculation portion 64 in addition to the configuration in the functional block diagram illustrated in Fig. 2.

The load change calculation portion 61 calculates the increase amount ΔFL indicating the change in the front wheel load FL based on, for example, the information about the deceleration acquired from the deceleration acquisition portion 7B of the vehicle information acquisition apparatus 7, similarly to the load change calculation portion 61 according to the second embodiment illustrated in Fig. 9.

The vehicle weight estimation portion 62 calculates the increase amount ΔVW indicating the change in the weight of the vehicle 1 based on the information about the vehicle weight, the number of passengers, and the loaded goods acquired from the specification information acquisition portion 7C, the passenger number detection portion 7D, and the loaded goods detection portion 7E of the vehicle information acquisition apparatus 7, similarly to the vehicle weight estimation portion 62 according to the third embodiment illustrated in Fig. 14.

The frictional coefficient calculation portion 64 acquires the information regarding the deceleration of the vehicle 1 when the braking for avoiding the collision is applied from the deceleration acquisition portion 7B of the vehicle information acquisition apparatus 7 and calculates the frictional coefficient μ of the road surface based on the acquired information regarding the deceleration, similarly to the frictional coefficient calculation portion 64 according to the fourth embodiment illustrated in Fig. 19.

Then, the torque correction value calculation portion 59 determines the correction gain Kcol based on the collision risk (the time-to-collision TTC) similarly to the first embodiment, determines the correction gain Kfl based on the increase amount ΔFL of the front wheel load FL similarly to the second embodiment, determines the correction gain Kwt based on the increase amount ΔVW of the vehicle weight similarly to the third embodiment, and determines the correction gain Kmu based on the frictional coefficient μ of the road surface similarly to the fourth embodiment.

The steering torque calculation portion 60 sets a result of correcting the target steering torque reference value Tref with use of the correction gain Kcol, the correction gain Kfl, the correction gain Kwt, and the correction gain Kmu as the final target steering torque Ttgt, and outputs the information regarding the target steering torque Ttgt to the electric power steering apparatus 8.

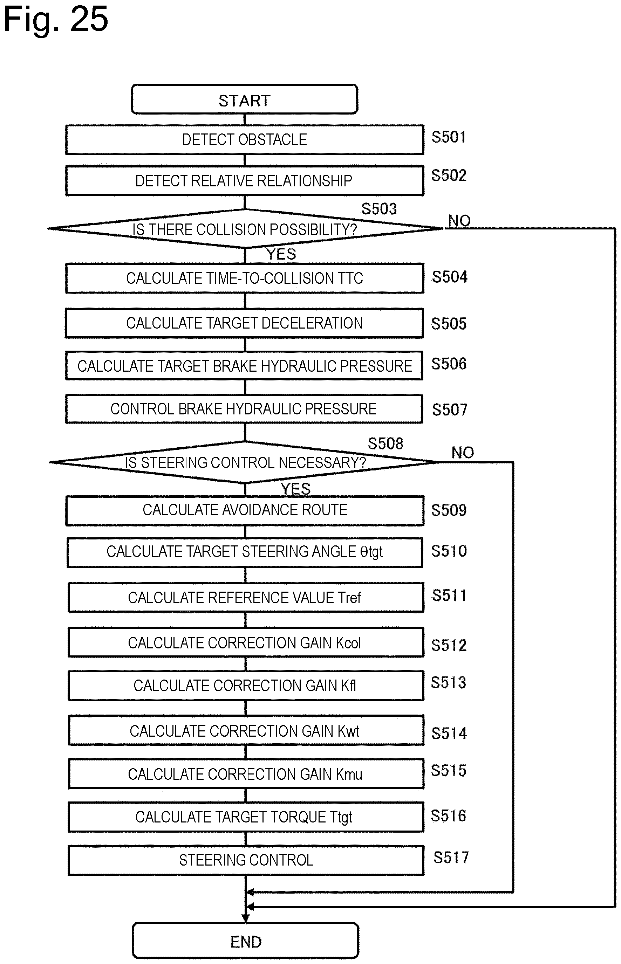

The flowchart in Fig. 25 is a flowchart illustrating a procedure of the braking control and the steering control for avoiding the collision by the control apparatus 11 illustrated in Fig. 24.

The control apparatus 11 performs similar processing in step S501 to step S512 in the flowchart in Fig. 25 to step S101 to step S112 in the flowchart in Fig. 3, and therefore the detailed descriptions about step S501 to step S512 will be omitted here.

After calculating the correction gain Kcol based on the collision risk (the time-to-collision TTC) in step S512, in the next step, step S513, the control apparatus 11 calculates the correction gain Kfl based on the increase amount ΔFL of the front wheel load FL by referring to the map in Fig. 11.

Next, in step S514, the control apparatus 11 calculates the correction gain Kwt based on the increase amount ΔVW of the vehicle weight by referring to the map in Fig. 16.

Further, in step S515, the control apparatus 11 calculates the correction gain Kmu based on the frictional coefficient μ of the road surface by referring to the map in Fig. 21.

Since the control apparatus 11 determines the correction gain Kcol, the correction gain Kfl, the correction gain Kwt, and the correction gain Kmu in these steps S512 to S515, the processing functions in step S512 to step S515 correspond to the torque correction value calculation portion 59.

In step S516 (the steering torque calculation portion 60), the control apparatus 11 calculates the final target steering torque Ttgt based on the target steering torque reference value Tref, the correction gain Kcol, the correction gain Kfl, the correction gain Kwt, and the correction gain Kmu according to an equation 13.

[Equation 13]

$$T_{tgt} = T_{ref} \times K_{col} \times max\left(K_{fl}, K_{wt}\right) \times K_{mu}$$

Then, in the next step, step S517, the control apparatus 11 outputs the torque instruction (the steering torque instruction) for achieving the target steering torque Ttgt to the electric power steering apparatus 8.

The electric power steering apparatus 8 performs the steering control based on the instruction indicating the target steering torque Ttgt to allow the angle of the steering wheel 9 to reach the target steering angle θtgt, thereby causing the vehicle 1 to move laterally by the lateral movement amount LM necessary to avoid the collision.

According to the above-described embodiment, since correcting the target steering torque Ttgt with use of the correction gain Kcol, the control apparatus 11 can amplify the steering torque when the collision risk increases, thereby improving the steering responsiveness to the precipitous change in the target steering angle θtgt.

Further, since correcting the target steering torque Ttgt with use of the correction gain Kfl, the control apparatus 11 can prevent the reduction in the steering responsiveness due to the insufficiency of the steering torque when the front wheel load increases due to the braking control for avoiding the collision.

Further, since correcting the target steering torque Ttgt with use of the correction gain Kwt, the control apparatus 11 can prevent the reduction in the steering responsiveness due to the insufficiency of the steering torque when the vehicle weight increases due to an increase in the number of passengers or loading of baggage.

Further, since correcting the target steering torque Ttgt with use of the correction gain Kmu, the control apparatus 11 can prevent the reduction in the collision avoidability due to an excessive increase in the steering torque for the self-aligning torque and thus a reduction in the cornering force when the frictional coefficient μ of the road surface is low.

Each technical idea described in the above-described embodiments can be used in combination as appropriate within a range not creating a contradiction.

Having described the contents of the present invention specifically with reference to the preferred embodiments thereof, it is apparent to those skilled in the art that the present invention can be embodied by various modifications based on the basic technical idea and teaching of the present invention.

For example, the control apparatus 11 can determine the final target steering torque Ttgt with use of two of the correction gain Kfl, the correction gain Kwt, and the correction gain Kmu, and the correction gain Kcol.

Further, the control apparatus 11 can determine the torque correction value for correcting the reference target torque by using a map in which a plurality of items among the specifications regarding the running of the vehicle 1, such as the collision risk (the time-to-collision TTC), the increase amount ΔFL of the front wheel load FL, the increase amount ΔVW of the vehicle weight, and the frictional coefficient $\mu$ of the road surface, is set as variables.

Further, the control apparatus 11 can determine the torque correction value for correcting the reference target torque based on the degree of wear of the tire, the pneumatic pressure of the tire, the slope of the road surface, the lateral inclination angle of the road surface (in other words, a turning inclination angle), and the like, as the specifications regarding the running of the vehicle 1. In sum, the specifications regarding the running of the vehicle 1 used to set the torque correction value can be a running condition of the vehicle 1 that affects the correlation between the steering torque (the torque of the steering actuator) and the steering angle.

Further, the control apparatus 11 can determine the collision risk based on the size of the obstacle OB, the direction in which the obstacle OB moves, and the like, and is not limited to the configuration that determines the collision risk based on the time-to-collision TTC (in other words, the relative distance and the relative speed).

In other words, the present invention shall not be limited to the above-described embodiments, and includes various modifications. For example, the above-described embodiments have been described in detail to facilitate a better understanding of the present invention, and the present invention shall not necessarily be limited to the configuration including all of the described features. Further, a part of the configuration of some embodiment can be replaced with the configuration of another embodiment. Further, some embodiment can also be implemented with a configuration of another embodiment added to the configuration of this embodiment. Further, each of embodiments can also be implemented with another configuration added, deleted, or replaced with respect to a part of the configuration of this embodiment.

The present application claims priority under the Paris Convention to Japanese Patent Application No. 2019-127623 filed on July 9, 2019. The entire disclosure of Japanese Patent Application No. 2019-127623 filed on July 9, 2019 including the specification, the claims, the drawings, and the abstract is incorporated herein by reference in its entirety.

REFERENCE SIGNS LIST

| | |
|---|---|
| 1 | vehicle |
| 2L, 2R, 3L, 3R | wheel |
| 4 | hydraulic braking apparatus |
| 4L, 4R, 5L, 5R | wheel cylinder |
| 6 | wheel cylinder hydraulic braking apparatus |
| 8 | electric power steering apparatus (actuator regarding steering) |
| 9 | steering wheel |
| 10 | external world perception apparatus (external world perception portion) |
| 11 | control apparatus (steering control apparatus, control portion) |

**Claims**

1. A steering control apparatus comprising:

   a control portion configured to control an actuator regarding steering that is mounted on a vehicle,
   wherein the control portion
   acquires a reference target torque, the reference target torque being a torque regarding the steering that is required to avoid an obstacle present ahead of the vehicle, which is acquired by an external world perception portion,
   determines a torque correction value for correcting the reference target torque based on specifications regarding running of the vehicle,
   determines a target torque based on the reference target torque and the torque correction value, and
   outputs a torque instruction for achieving the determined target torque to the actuator.

2. The steering control apparatus according to claim 1, wherein the specifications regarding the running of the vehicle include a risk of a collision with the obstacle based on a relative distance between the obstacle and the vehicle and a speed of the vehicle.

3. The steering control apparatus according to claim 2, wherein the specifications regarding the running of the vehicle include a change in a load of a front wheel of the vehicle due to braking of the vehicle.

4. The steering control apparatus according to claim 3, wherein the specifications regarding the running of the vehicle include a change in a weight of the vehicle.

5. The steering control apparatus according to claim 4, wherein the specifications regarding the running of the vehicle include a frictional coefficient of a road surface on which the vehicle runs.

6. The steering control apparatus according to claim 2, wherein the specifications regarding the running of the vehicle include a change in a weight of the vehicle.

7. The steering control apparatus according to claim 2, wherein the specifications regarding the running of the vehicle include a frictional coefficient of a road surface on which the vehicle runs.

8. The steering control apparatus according to claim 2, wherein the control portion increases the torque correction value as the collision risk increases.

9. The steering control apparatus according to claim 8, wherein the control portion increases the torque correction value determined based on the collision risk after a timing at which a braking force is applied to the vehicle.

10. The steering control apparatus according to claim 1, wherein the specifications regarding the running of the vehicle include a change in a load of a front wheel of the vehicle due to braking of the vehicle.

11. The steering control apparatus according to claim 10, wherein the control portion increases the torque correction value as the change in the load increases in a direction that the load increases.

12. The steering control apparatus according to claim 1, wherein the specifications regarding the running of the vehicle include a change in a weight of the vehicle.

13. The steering control apparatus according to claim 12, wherein the control portion increases the torque correction value as the change in the weight of the vehicle increases in a direction that the weight of the vehicle increases.

14. The steering control apparatus according to claim 1, wherein the specifications regarding the running of the vehicle include a frictional coefficient of a road surface on which the vehicle runs.

15. The steering control apparatus according to claim 14, wherein the control portion increases the torque correction value as the frictional coefficient increases.

16. The steering control apparatus according to claim 1, wherein the control portion determines the reference target torque based on a speed of the vehicle and a target steering angle required to avoid the obstacle present ahead of the vehicle.

17. A steering control method for controlling an actuator regarding steering that is mounted on a vehicle, the method comprising:

acquiring a reference target torque, the reference target torque being a torque regarding the steering that is required to avoid an obstacle present ahead of the vehicle, which is acquired by an external world perception portion;
determining a torque correction value for correcting the reference target torque based on specifications regarding running of the vehicle;
determining a target torque based on the reference target torque and the torque correction value; and
outputting a torque instruction for achieving the determined target torque to the actuator.

18. A steering control system comprising:

an external world perception portion configured to acquire external world information of a vehicle;
a control portion, wherein the control portion acquires a reference target torque, the reference target torque being a torque regarding steering that is required to avoid an obstacle present ahead of the vehicle, which is acquired by the external world perception portion,
determines a torque correction value for correcting the reference target torque based on specifications regarding running of the vehicle,
determines a target torque based on the reference target torque and the torque correction value, and
outputs a torque instruction for achieving the determined target torque; and
an actuator regarding the steering that is mounted on the vehicle, the actuator being configured to acquire the torque instruction output from the control portion.

Fig. 1

Fig. 2

# Fig. 3

```
                    ┌─────────────────────────────┐
                    │            START            │
                    └─────────────────────────────┘
                                   │
        ┌──────────────────────────────────────────────┐
        │             DETECT OBSTACLE                   │  S101
        └──────────────────────────────────────────────┘
        ┌──────────────────────────────────────────────┐
        │        DETECT RELATIVE RELATIONSHIP           │  S102
        └──────────────────────────────────────────────┘
                                   │              S103
              ◇──────────────────────────────────◇  NO
               ◇  IS THERE COLLISION POSSIBILITY? ◇────────┐
                       ◇──────────────────◇                │
                             │ YES                          │
        ┌──────────────────────────────────────────────┐   │
        │       CALCULATE TIME-TO-COLLISION TTC         │  S104
        └──────────────────────────────────────────────┘   │
        ┌──────────────────────────────────────────────┐   │
        │       CALCULATE TARGET DECELERATION           │  S105
        └──────────────────────────────────────────────┘   │
        ┌──────────────────────────────────────────────┐   │
        │  CALCULATE TARGET BRAKE HYDRAULIC PRESSURE     │  S106
        └──────────────────────────────────────────────┘   │
        ┌──────────────────────────────────────────────┐   │
        │    CONTROL BRAKE HYDRAULIC PRESSURE           │  S107
        └──────────────────────────────────────────────┘   │
                                   │              S108       │
              ◇──────────────────────────────────◇  NO      │
               ◇  IS STEERING CONTROL NECESSARY?  ◇──────┐  │
                       ◇──────────────────◇              │  │
                             │ YES                        │  │
        ┌──────────────────────────────────────────────┐ │  │
        │         CALCULATE AVOIDANCE ROUTE             │ S109
        └──────────────────────────────────────────────┘ │  │
        ┌──────────────────────────────────────────────┐ │  │
        │   CALCULATE TARGET STEERING ANGLE θtgt        │ S110
        └──────────────────────────────────────────────┘ │  │
        ┌──────────────────────────────────────────────┐ │  │
        │       CALCULATE REFERENCE VALUE Tref          │ S111
        └──────────────────────────────────────────────┘ │  │
        ┌──────────────────────────────────────────────┐ │  │
        │      CALCULATE CORRECTION GAIN Kcol           │ S112
        └──────────────────────────────────────────────┘ │  │
        ┌──────────────────────────────────────────────┐ │  │
        │       CALCULATE TARGET TORQUE Ttgt            │ S113
        └──────────────────────────────────────────────┘ │  │
        ┌──────────────────────────────────────────────┐ │  │
        │            STEERING CONTROL                   │ S114
        └──────────────────────────────────────────────┘ │  │
                                   │ ◀────────────────────┘  │
                                   │ ◀───────────────────────┘
                    ┌─────────────────────────────┐
                    │             END             │
                    └─────────────────────────────┘
```

# Fig. 4

RUNNING TRAJECTORY

OBSTACLE

L

SL

D

$\frac{W}{2}$

W

ΔV

# Fig. 5

# Fig. 6

# Fig. 7

TTC1 ⋯⋯⋯⋯⋯⋯⋯⋯⋯⋯⋯

TIME-TO-COLLISION
TTC

COLLISION RISK HIGH: REGION REQUIRING CORRECTION

TIME

CORRECTION GAIN
Kcol

Kcol=Kcolmin (=1.0)

TIME

TARGET STEERING
TORQUE Ttgt
(Ttgt=Tref)

TIME

STEERING ANGLE

TARGET STEERING
ANGLE θtgt

ACTUAL STEERING ANGLE
(NOT CORRECTED)

TIME

OBSTACLE

ACTUAL RUNNING TRAJECTORY
(NOT CORRECTED)

TARGET TRAJECTORY

# Fig. 8

TIME-TO-COLLISION TTC

TTC1
TTC2

COLLISION RISK HIGH: REGION REQUIRING CORRECTION

TIME

CORRECTION GAIN Kcol

Kcolmax

Kcolmin(=1.0)

TIME

TARGET STEERING TORQUE Ttgt
$(Ttgt=Tref \times Kcol)$

NOT CORRECTED

CORRECTED

TIME

STEERING ANGLE

TARGET STEERING ANGLE θtgt

ACTUAL STEERING ANGLE (CORRECTED)

TIME

OBSTACLE

ACTUAL RUNNING TRAJECTORY (CORRECTED)

TARGET TRAJECTORY

# Fig. 9

EP 3 998 188 A1

# Fig. 10

```
                    ┌─────────────────────────────────┐
                    │             START                │
                    └─────────────────────────────────┘
                    ┌─────────────────────────────────┐
                    │        DETECT OBSTACLE           │ S201
                    └─────────────────────────────────┘
                    ┌─────────────────────────────────┐
                    │    DETECT RELATIVE RELATIONSHIP  │ S202
                    └─────────────────────────────────┘
                                                    S203
              ◇────────────────────────────────────────◇   NO
                    IS THERE COLLISION POSSIBILITY?
                              YES
                    ┌─────────────────────────────────┐
                    │    CALCULATE TIME-TO-COLLISION TTC│ S204
                    └─────────────────────────────────┘
                    ┌─────────────────────────────────┐
                    │   CALCULATE TARGET DECELERATION  │ S205
                    └─────────────────────────────────┘
                    ┌─────────────────────────────────┐
                    │ CALCULATE TARGET BRAKE HYDRAULIC PRESSURE │ S206
                    └─────────────────────────────────┘
                    ┌─────────────────────────────────┐
                    │  CONTROL BRAKE HYDRAULIC PRESSURE │ S207
                    └─────────────────────────────────┘
                                                    S208
              ◇────────────────────────────────────────◇   NO
                    IS STEERING CONTROL NECESSARY?
                              YES
                    ┌─────────────────────────────────┐
                    │    CALCULATE AVOIDANCE ROUTE     │ S209
                    └─────────────────────────────────┘
                    ┌─────────────────────────────────┐
                    │ CALCULATE TARGET STEERING ANGLE θtgt │ S210
                    └─────────────────────────────────┘
                    ┌─────────────────────────────────┐
                    │   CALCULATE REFERENCE VALUE Tref │ S211
                    └─────────────────────────────────┘
                    ┌─────────────────────────────────┐
                    │   CALCULATE CORRECTION GAIN Kcol │ S212
                    └─────────────────────────────────┘
                    ┌─────────────────────────────────┐
                    │    CALCULATE CORRECTION GAIN Kfl │ S213
                    └─────────────────────────────────┘
                    ┌─────────────────────────────────┐
                    │   CALCULATE TARGET TORQUE Ttgt   │ S214
                    └─────────────────────────────────┘
                    ┌─────────────────────────────────┐
                    │       STEERING CONTROL           │ S215
                    └─────────────────────────────────┘

                    ┌─────────────────────────────────┐
                    │             END                  │
                    └─────────────────────────────────┘
```

# Fig. 11

# Fig. 12

FRONT WHEEL
LOAD FL

TIME

CORRECTION GAIN
Kfl

$Kfl = Kflmin (= 1.0)$

TIME

TARGET STEERING
TORQUE Ttgt

TIME

ACTUAL STEERING ANGLE
(NOT CORRECTED)

STEERING ANGLE

TARGET STEERING
ANGLE θtgt

TIME

OBSTACLE

ACTUAL RUNNING TRAJECTORY
(NOT CORRECTED)

TARGET TRAJECTORY

# Fig. 13

FRONT WHEEL
LOAD FL

ΔFL2

ΔFL1

TIME

CORRECTION GAIN
Kfl

Kflmax

Kflmin(=1.0)

TIME

TARGET STEERING
TORQUE Ttgt

NOT CORRECTED

CORRECTED

TIME

STEERING ANGLE

ACTUAL STEERING ANGLE (CORRECTED)

TARGET STEERING
ANGLE θtgt

TIME

OBSTACLE

ACTUAL RUNNING
TRAJECTORY (CORRECTED)

TARGET TRAJECTORY

Fig. 14

# Fig. 15

```
                    ┌──────────────────────┐
                    │        START         │
                    └──────────────────────┘
                              │
        ┌─────────────────────────────────────────┐
        │            DETECT OBSTACLE               │  S301
        └─────────────────────────────────────────┘
                              │
        ┌─────────────────────────────────────────┐
        │        DETECT RELATIVE RELATIONSHIP      │  S302
        └─────────────────────────────────────────┘
                              │                S303
              <IS THERE COLLISION POSSIBILITY?>───── NO ──┐
                              │ YES                       │
        ┌─────────────────────────────────────────┐      │
        │        CALCULATE TIME-TO-COLLISION TTC   │  S304│
        └─────────────────────────────────────────┘      │
                              │                           │
        ┌─────────────────────────────────────────┐      │
        │        CALCULATE TARGET DECELERATION     │  S305│
        └─────────────────────────────────────────┘      │
                              │                           │
        ┌─────────────────────────────────────────┐      │
        │  CALCULATE TARGET BRAKE HYDRAULIC PRESSURE│ S306│
        └─────────────────────────────────────────┘      │
                              │                           │
        ┌─────────────────────────────────────────┐      │
        │     CONTROL BRAKE HYDRAULIC PRESSURE     │  S307│
        └─────────────────────────────────────────┘      │
                              │                S308       │
              <IS STEERING CONTROL NECESSARY?>──── NO ──┐ │
                              │ YES                     │ │
        ┌─────────────────────────────────────────┐    │ │
        │        CALCULATE AVOIDANCE ROUTE         │ S309 │
        └─────────────────────────────────────────┘    │ │
                              │                         │ │
        ┌─────────────────────────────────────────┐    │ │
        │    CALCULATE TARGET STEERING ANGLE θtgt  │ S310 │
        └─────────────────────────────────────────┘    │ │
                              │                         │ │
        ┌─────────────────────────────────────────┐    │ │
        │     CALCULATE REFERENCE VALUE Tref       │ S311 │
        └─────────────────────────────────────────┘    │ │
                              │                         │ │
        ┌─────────────────────────────────────────┐    │ │
        │     CALCULATE CORRECTION GAIN Kcol       │ S312 │
        └─────────────────────────────────────────┘    │ │
                              │                         │ │
        ┌─────────────────────────────────────────┐    │ │
        │     CALCULATE CORRECTION GAIN Kwt        │ S313 │
        └─────────────────────────────────────────┘    │ │
                              │                         │ │
        ┌─────────────────────────────────────────┐    │ │
        │     CALCULATE TARGET TORQUE Ttgt         │ S314 │
        └─────────────────────────────────────────┘    │ │
                              │                         │ │
        ┌─────────────────────────────────────────┐    │ │
        │          STEERING CONTROL               │ S315 │
        └─────────────────────────────────────────┘    │ │
                              │◄────────────────────────┘ │
                              │◄──────────────────────────┘
                    ┌──────────────────────┐
                    │         END          │
                    └──────────────────────┘
```

# Fig. 16

LARGE

CORRECTION
GAIN Kwt

Kwtmax

Kwtmin

1.0

0

0          Δ VW1          Δ VW2          LARGE

INCREASE AMOUNT ΔVW OF VEHICLE WEIGHT

# Fig. 17

VEHICLE WEIGHT

INCREASE AMOUNT ∆VW2
OF VEHICLE WEIGHT

REFERENCE VALUE

TIME

CORRECTION GAIN
Kwt

Kwt＝Kwtmin (＝1.0)

TIME

TARGET STEERING
TORQUE Ttgt

TIME

ACTUAL STEERING ANGLE (NOT CORRECTED)

STEERING ANGLE

TARGET STEERING
ANGLE θtgt

TIME

OBSTACLE

ACTUAL RUNNING TRAJECTORY
(NOT CORRECTED)

TARGET TRAJECTORY

# Fig. 18

CHANGE IN
VEHICLE WEIGHT

INCREASE AMOUNT ΔVW
OF VEHICLE WEIGHT

TIME

CORRECTION GAIN
Kwt

Kwtmax

Kwtmin(=1.0)

TIME

TARGET STEERING
TORQUE Ttgt

NOT CORRECTED

CORRECTED

TIME

STEERING ANGLE

TARGET STEERING
ANGLE θtgt

ACTUAL STEERING ANGLE
(CORRECTED)

TIME

OBSTACLE

ACTUAL RUNNING TRAJECTORY
(CORRECTED)

TARGET TRAJECTORY

# Fig. 19

EP 3 998 188 A1

# Fig. 20

```
                    ┌──────────────────────────────────┐
                    │              START               │
                    └──────────────────────────────────┘
                    ┌──────────────────────────────────┐ S401
                    │          DETECT OBSTACLE         │
                    └──────────────────────────────────┘
                    ┌──────────────────────────────────┐ S402
                    │     DETECT RELATIVE RELATIONSHIP │
                    └──────────────────────────────────┘
                                                   S403
                    ◇ IS THERE COLLISION POSSIBILITY? ◇────── NO
                              YES
                    ┌──────────────────────────────────┐ S404
                    │    CALCULATE TIME-TO-COLLISION TTC│
                    └──────────────────────────────────┘
                    ┌──────────────────────────────────┐ S405
                    │    CALCULATE TARGET DECELERATION │
                    └──────────────────────────────────┘
                    ┌──────────────────────────────────┐ S406
                    │CALCULATE TARGET BRAKE HYDRAULIC PRESSURE│
                    └──────────────────────────────────┘
                    ┌──────────────────────────────────┐ S407
                    │  CONTROL BRAKE HYDRAULIC PRESSURE │
                    └──────────────────────────────────┘
                                                   S408
                    ◇ IS STEERING CONTROL NECESSARY? ◇────── NO
                              YES
                    ┌──────────────────────────────────┐ S409
                    │      CALCULATE AVOIDANCE ROUTE   │
                    └──────────────────────────────────┘
                    ┌──────────────────────────────────┐ S410
                    │ CALCULATE TARGET STEERING ANGLE θtgt│
                    └──────────────────────────────────┘
                    ┌──────────────────────────────────┐ S411
                    │   CALCULATE REFERENCE VALUE Tref  │
                    └──────────────────────────────────┘
                    ┌──────────────────────────────────┐ S412
                    │   CALCULATE CORRECTION GAIN Kcol  │
                    └──────────────────────────────────┘
                    ┌──────────────────────────────────┐ S413
                    │   CALCULATE CORRECTION GAIN Kmu   │
                    └──────────────────────────────────┘
                    ┌──────────────────────────────────┐ S414
                    │    CALCULATE TARGET TORQUE Ttgt   │
                    └──────────────────────────────────┘
                    ┌──────────────────────────────────┐ S415
                    │          STEERING CONTROL        │
                    └──────────────────────────────────┘
                    ┌──────────────────────────────────┐
                    │               END                │
                    └──────────────────────────────────┘
```

# Fig. 21

# Fig. 22

# Fig. 23

Fig. 24

# Fig. 25

```
                      ┌─────────────────────────┐
                      │          START          │
                      └─────────────────────────┘
                                  │
           ┌──────────────────────────────────────────┐
           │           DETECT OBSTACLE                 │  S501
           └──────────────────────────────────────────┘
                                  │
           ┌──────────────────────────────────────────┐
           │      DETECT RELATIVE RELATIONSHIP         │  S502
           └──────────────────────────────────────────┘
                                  │        S503
              ╱────────────────────────────────────╲       NO
             ╱    IS THERE COLLISION POSSIBILITY?    ╲────────────┐
              ╲────────────────────────────────────╱             │
                              YES                                 │
           ┌──────────────────────────────────────────┐          │
           │      CALCULATE TIME-TO-COLLISION TTC      │  S504    │
           └──────────────────────────────────────────┘          │
                                  │                               │
           ┌──────────────────────────────────────────┐          │
           │       CALCULATE TARGET DECELERATION       │  S505    │
           └──────────────────────────────────────────┘          │
                                  │                               │
           ┌──────────────────────────────────────────┐          │
           │ CALCULATE TARGET BRAKE HYDRAULIC PRESSURE │  S506    │
           └──────────────────────────────────────────┘          │
                                  │                               │
           ┌──────────────────────────────────────────┐          │
           │     CONTROL BRAKE HYDRAULIC PRESSURE      │  S507    │
           └──────────────────────────────────────────┘          │
                                  │        S508                   │
              ╱────────────────────────────────────╲       NO     │
             ╱   IS STEERING CONTROL NECESSARY?      ╲────────┐    │
              ╲────────────────────────────────────╱         │    │
                              YES                            │    │
           ┌──────────────────────────────────────────┐      │    │
           │        CALCULATE AVOIDANCE ROUTE          │ S509 │    │
           └──────────────────────────────────────────┘      │    │
                                  │                           │    │
           ┌──────────────────────────────────────────┐      │    │
           │  CALCULATE TARGET STEERING ANGLE θtgt     │ S510 │    │
           └──────────────────────────────────────────┘      │    │
                                  │                           │    │
           ┌──────────────────────────────────────────┐      │    │
           │      CALCULATE REFERENCE VALUE Tref       │ S511 │    │
           └──────────────────────────────────────────┘      │    │
                                  │                           │    │
           ┌──────────────────────────────────────────┐      │    │
           │      CALCULATE CORRECTION GAIN Kcol       │ S512 │    │
           └──────────────────────────────────────────┘      │    │
                                  │                           │    │
           ┌──────────────────────────────────────────┐      │    │
           │       CALCULATE CORRECTION GAIN Kfl       │ S513 │    │
           └──────────────────────────────────────────┘      │    │
                                  │                           │    │
           ┌──────────────────────────────────────────┐      │    │
           │       CALCULATE CORRECTION GAIN Kwt       │ S514 │    │
           └──────────────────────────────────────────┘      │    │
                                  │                           │    │
           ┌──────────────────────────────────────────┐      │    │
           │       CALCULATE CORRECTION GAIN Kmu       │ S515 │    │
           └──────────────────────────────────────────┘      │    │
                                  │                           │    │
           ┌──────────────────────────────────────────┐      │    │
           │       CALCULATE TARGET TORQUE Ttgt        │ S516 │    │
           └──────────────────────────────────────────┘      │    │
                                  │                           │    │
           ┌──────────────────────────────────────────┐      │    │
           │            STEERING CONTROL              │ S517  │    │
           └──────────────────────────────────────────┘      │    │
                                  │◄─────────────────────────┘    │
                                  │◄──────────────────────────────┘
                                  ▼
                      ┌─────────────────────────┐
                      │           END           │
                      └─────────────────────────┘
```

## INTERNATIONAL SEARCH REPORT

| | International application No. |
| --- | --- |
| | PCT/JP2020/022647 |

**A. CLASSIFICATION OF SUBJECT MATTER**
Int.Cl. B62D101/00(2006.01)n, B60T7/12(2006.01)i, B62D6/00(2006.01)i, B60W10/20(2006.01)i, B60W10/18(2012.01)i, B60W10/04(2006.01)i, B60W30/09(2012.01)i
FI: B62D6/00, B60T7/12C, B60W10/00132, B60W10/00134, B60W30/09, B62D101:00
According to International Patent Classification (IPC) or to both national classification and IPC

**B. FIELDS SEARCHED**

Minimum documentation searched (classification system followed by classification symbols)
Int.Cl. B60W10/00, 30/00-60/00, B62D5/04, 6/00, G08G1/00-99/00

Documentation searched other than minimum documentation to the extent that such documents are included in the fields searched
　　Published examined utility model applications of Japan　　　1922-1996
　　Published unexamined utility model applications of Japan　　1971-2020
　　Registered utility model specifications of Japan　　　　　　1996-2020
　　Published registered utility model applications of Japan　　1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | JP 2000-357299 A (HONDA MOTOR CO., LTD.)<br>26.12.2000 (2000-12-26), paragraphs [0022]-[0025],<br>[0064]-[0073], fig. 1-4, 7, 11, 19-22 | 1, 17-18<br>2-8, 10-15<br>9, 16 |
| Y | JP 2000-43741 A (MITSUBISHI MOTORS CORPORATION)<br>15.02.2000 (2000-02-15), paragraphs [0015]-[0021] | 2-8 |
| Y | JP 2007-302050 A (NSK LTD.) 22.11.2007 (2007-11-<br>22), paragraphs [0020], [0025] | 3-5, 10-11 |
| Y | JP 2008-49934 A (JTEKT CORPORATION) 06.03.2008<br>(2008-03-06), paragraphs [0025], [0026] | 4-6, 12-13 |
| Y | JP 2003-205849 A (KOYO SEIKO CO., LTD.) 22.07.2003<br>(2003-07-22), paragraph [0022] | 5, 7, 14-15 |

☒ Further documents are listed in the continuation of Box C.　　☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 　21.07.2020 | 　04.08.2020 |

| Name and mailing address of the ISA/<br>　Japan Patent Office<br>　3-4-3, Kasumigaseki, Chiyoda-ku,<br>　Tokyo 100-8915, Japan | Authorized officer<br><br>Telephone No. |
| --- | --- |

Form PCT/ISA/210 (second sheet) (January 2015)

**EP 3 998 188 A1**

| International application No. |
| --- |
| PCT/JP2020/022647 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2012-516806 A (CONTINENTAL TEVES AG & CO. OHG) 26.07.2012 (2012-07-26), entire text, all drawings | 1-18 |
| A | US 2015/0158528 A1 (GM GLOBAL TECHNOLOGY OPERATIONS LLC) 11.06.2015 (2015-06-11), entire text, all drawings | 1-18 |

Form PCT/ISA/210 (second sheet) (January 2015)

**INTERNATIONAL SEARCH REPORT**
Information on patent family members

| International application No. |
| --- |
| PCT/JP2020/022647 |

```
JP 2000-357299 A   26.12.2000    US 6571176 B1
                                 column 4, line 23 to column 5, line 30,
                                 column 12, line 37 to column 14, line 46,
                                 fig. 1-4, 7, 11, 19-22
                                 DE 10029710 A1

JP 2000-43741 A    15.02.2000    (Family: none)

JP 2007-302050 A   22.11.2007    (Family: none)

JP 2008-49934 A    06.03.2008    (Family: none)

JP 2003-205849 A   22.07.2003    (Family: none)

JP 2012-516806 A   26.07.2012    US 2011/0279254 A1
                                 entire text, all drawings
                                 WO 2010/089240 A1
                                 DE 102010001313 A1
                                 CN 102307774 A
                                 KR 10-2011-0134402 A

US 2015/0158528 A1 11.06.2015    CN 104709348 A
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017081250 A
- JP 6501048 B

- JP 2019127623 A